# EUROPÄISCHE PATENTANMELDUNG

(11) **EP 4 772 023 A1**
(43) Veröffentlichungstag der Anmeldung: **08.07.2026**
(21) Anmeldenummer: 25150136.7
(22) Anmeldetag: 03.01.2025
(51) Int. Cl.: A23L 2/395, A23L 7/10, A23P 10/25

(54) **VERFAHREN ZUR HERSTELLUNG EINER MAHLERZEUGNIS-ZUSAMMENSETZUNG ZUR AUFLÖSUNG IN EINER VERZEHRBAREN FLÜSSIGKEIT**

(71) Anmelder: PLANETHIC GROUP AG, 14974 Ludwigsfelde (DE)
(72) Erfinder: GÜNTHER, Johanna Marie Kristina, 14532 Kleinmachnow (DE); VOIGT, Sascha, 09221 Neukirchen (DE); KREUTZER, André, 09113 Chemnitz (DE)
(74) Vertreter: Hertin und Partner Rechts- und Patentanwälte PartG mbB

(57) **Zusammenfassung**

Die Erfindung betrifft ein Verfahren zur Herstellung einer nicht-flüssigen Mahlerzeugnis-Zusammensetzung für die Herstellung einer flüssigen Mahlerzeugnis-Zusammensetzung, umfassend (i.) Bereitstellen einer Paste enthaltend ein Mahlerzeugnis, Wasser und ein Pflanzenfett, wobei die Paste 5 bis 50 Gew.-% Wasser und 2 bis 10 Gew.-% Pflanzenfett enthält, bezogen auf das Gesamtgewicht der Paste, (ii.) Formen der Paste (i.) zu einem Strang. In einem weiteren Aspekt betrifft die Erfindung eine Mahlerzeugnis-Zusammensetzung zur Auflösung und/oder Dispergierung in einer verzehrbaren Flüssigkeit hergestellt und/oder herstellbar mittels des Verfahrens der vorliegenden Erfindung, dadurch gekennzeichnet, dass die Mahlerzeugnis-Zusammensetzung 5 bis 15 Gew.-% Wasser und 2 bis 10 Gew.-% Pflanzenfett enthält. In einem weiteren Aspekt betrifft die Erfindung eine Lebensmittel-Zusammensetzung zur Auflösung und/oder Dispergierung in einer verzehrbaren Flüssigkeit enthaltend eine Mahlerzeugnis-Zusammensetzung hergestellt und/oder herstellbar mittels des Verfahrens der vorliegenden Erfindung. In einem weiteren Aspekt betrifft die Erfindung eine flüssige Mahlerzeugnis-Zusammensetzung hergestellt durch Auflösen und/oder Dispergieren der Mahlerzeugnis-Zusammensetzung der vorliegenden Erfindung in einer verzehrbaren Flüssigkeit.

## Beschreibung

Die Erfindung betrifft den Bereich der pflanzenbasierten Getränke und Lebensmittelzusammensetzungen, insbesondere der Herstellungsverfahren für solche Zusammensetzungen.

Die Erfindung betrifft ein Verfahren zur Herstellung einer nicht-flüssigen Mahlerzeugnis-Zusammensetzung für die Herstellung einer flüssigen Mahlerzeugnis-Zusammensetzung, umfassend die Bereitstellung einer pastösen Mischung aus einem Mahlerzeugnis, Wasser und ein Pflanzenfett und Formen der Paste zu einem Strang.

Die Erfindung betrifft ein Verfahren zur Herstellung einer nicht-flüssigen Mahlerzeugnis-Zusammensetzung für die Herstellung einer flüssigen Mahlerzeugnis-Zusammensetzung, umfassend (i.) Bereitstellen einer Paste enthaltend ein Mahlerzeugnis, Wasser und ein Pflanzenfett, wobei die Paste 5 bis 50 Gew.-% Wasser und 2 bis 10 Gew.-% Pflanzenfett enthält, bezogen auf das Gesamtgewicht der Paste, (ii.) Formen der Paste (i.) zu einem Strang. Die Erfindung betrifft vorzugsweise ein Verfahren, welches dadurch gekennzeichnet ist, dass die Paste mittels eines Rotationsmittels zu einem Strang geformt wird, wobei durch das Rotationsmittel vorzugsweise ein rotativer Kraftaufwand auf die Paste ausgeübt wird.

In einem weiteren Aspekt betrifft die Erfindung eine Mahlerzeugnis-Zusammensetzung zur Auflösung und/oder Dispersion in einer verzehrbaren Flüssigkeit hergestellt und/oder herstellbar mittels des Verfahrens der vorliegenden Erfindung, dadurch gekennzeichnet, dass die Mahlerzeugnis-Zusammensetzung 5 bis 15, vorzugsweise 5 bis 12 Gew.-% Wasser, besonders vorzugsweise 5 bis 10 Gew.-% Wasser, und 2 bis 10 Gew.-% Pflanzenfett enthält. In einem weiteren Aspekt betrifft die Erfindung eine Lebensmittel-Zusammensetzung zur Auflösung und/oder Dispersion in einer verzehrbaren Flüssigkeit enthaltend eine Mahlerzeugnis-Zusammensetzung hergestellt und/oder herstellbar mittels des Verfahrens der vorliegenden Erfindung.

In einem weiteren Aspekt betrifft die Erfindung eine flüssige Mahlerzeugnis-Zusammensetzung hergestellt durch Auflösen der Mahlerzeugnis-Zusammensetzung der vorliegenden Erfindung in einer verzehrbaren Lösung.

### HINTERGRUND UND STAND DER TECHNIK

In den letzten Jahren haben pflanzliche Alternativen zu tierischen Produkten stark an Bedeutung gewonnen. Zentrale Produkte sind hierbei pflanzliche Alternativen zu Kuhmilch, welche aus einer Vielzahl von Pflanzenquellen wie beispielsweise Soja, Mandeln, Kokos, Reis, Erbsen und Hafer hergestellt werden können. Diese Produkte sind dabei besonders vorteilhaft für Konsumenten, welche sich aus gesundheitlichen Gründen (z.B. Laktoseintoleranz oder Allergien), ethischen Überlegungen (Tierschutz) oder ökologischen Gründen (beispielsweise geringerer COz-Ausstoß und geringerer Wasserverbrauch im Vergleich zur Tierhaltung) für eine pflanzenbasierte Ernährung entscheiden.

Auf Hafer-basierende Getränke haben sich dabei als besonders beliebte Alternative zu Kuhmilch herausgestellt, da es sich bei Hafer um eine nachhaltige Anbaupflanze handelt, welche zudem besonders bekömmlich und nährstoffreich aufgrund der enthaltenen Ballaststoffe, komplexen Kohlenhydrate sowie Vitamine und Mineralstoffe wie Eisen und Magnesium ist.

Hierbei ist für die Herstellung haferbasierter Pflanzendrinks zunächst eine enzymatische Behandlung des Hafers notwendig. Hafer besteht aus komplexen Kohlenhydraten wie Stärke, welche erst durch den Einsatz von Enzymen wie beispielsweise Amylasen in kleinere Zuckermoleküle (z.B. Maltose und Glucose) aufgespalten werden müssen, um eine milchartige Konsistenz und einen angenehmen, leicht süßlichen Geschmack zu erzielen. Die Süße kann dabei durch die Bedingungen der enzymatischen Behandlung wie beispielsweise durch die Dauer oder das eingesetzte Enzym kontrolliert werden.

Die enzymatische Behandlung des Hafers umfasst im Wesentlichen die folgenden Schritte: Zugabe von Wasser, Mahlen des Hafers, enzymatische Hydrolyse, und Filtration und/oder Abtrennung von Feststoffen wie beispielsweise faserige Reste. Im Anschluss erfolgt bei der Herstellung eines Hafergetränkes aus der enzymatisch aufgespalteten und abfiltrierten Hafermischung in der Regel die Zugabe weiterer Inhaltsstoffe wie beispielsweise eines Öls oder Salz, und ein Erhitzungsschritt für die Inaktivierung möglicherweise verbleibender Enzyme und die Abtötung von Mikroorganismen, um eine mikrobielle Stabilität des Produktes zu erreichen. Der zentrale Schritt des Prozesses ist dabei die enzymatische Hydrolyse, bei der Enzyme, üblicherweise Amylasen wie Alpha-Amylase und Beta-Amylase, zum Einsatz kommen. Ein solcher Prozess und die Herstellung eines flüssigen Haferdrinks ist beispielsweise in WO2014123466A1 beschrieben. Hierbei werden zusätzlich zu Amylasen für die Aufspaltung von Stärke Protein-Deaminasen eingesetzt, um hochmolekulare Haferproteine (wie Haferglobulin) zu deamidieren und so die Löslichkeit der Proteine und somit den Proteingehalt des Hafergetränkes zu erhöhen. Eine enzymatische Aufspaltung wird in ähnlicher Weise auch für die Herstellung von anderen pflanzenbasierten Getränken wie beispielsweise aus Soja, Mandeln, Reis, Erbsen und Kokos eingesetzt um beispielsweise Stärke, Fette und Proteine aufzuspalten.

Trotz der genannten Vorteile pflanzlicher Milchalternativen wie beispielsweise haferbasierter Pflanzengetränke bestehen jedoch auch Nachteile bei der herkömmlichen Herstellung und Vermarktung dieser Produkte, insbesondere wenn sie in flüssiger Form angeboten werden. Ein wesentlicher Nachteil liegt dabei in der logistischen und ökologischen Belastung, die mit der Produktion, Lagerung und dem Transport flüssiger Getränke einhergeht:
Flüssige pflanzliche Getränke werden üblicherweise in Kartons, Flaschen oder Tetrapaks verpackt, die sowohl in der Produktion als auch in der Entsorgung Umweltbelastungen verursachen können. Einige dieser Verpackungen sind schwer recycelbar, da sie aus mehreren Materialschichten bestehen, darunter Kunststoff, Aluminium und Papier. Weiterhin sind flüssige Produkte schwer und voluminös im Vergleich zu festen Produkten, wodurch ein erhöhter Lager- und Transportaufwand beispielsweise für die Belieferung von und Lagerung in Lebensmittelgeschäften aber auch für den Endverbraucher verbunden ist. Dies bedeutet nicht nur höhere Lager- und Transportkosten, sondern auch einen höheren Energieverbrauch und damit eine größere COz-Belastung durch den Transport. Um die Haltbarkeit von flüssigen pflanzlichen Getränken zu gewährleisten, werden zudem häufig Konservierungsstoffe und Stabilisatoren hinzugefügt. Diese Zusätze können den gesundheitlichen Mehrwert der Getränke beeinträchtigen. Trotz dieser Zusatzstoffe weisen flüssige pflanzliche Getränke zudem häufig eine kürzere Haltbarkeit als feste Produkte auf.

Um diesen Nachteilen flüssiger Pflanzengetränke zu begegnen, wurden im Stand der Technik pflanzliche Getränke in Pulverform entwickelt. Diese bieten insbesondere Vorteile in Bezug auf die Haltbarkeit, da sie keine Flüssigkeit enthalten, und in Bezug auf den Transport und die Lagerung, da sie leicht und kompakt sind und somit geringere Lager- und Transportkosten und ein geringerer COz-Ausstoß anfallen. Die Herstellung von Pulvern erfordert jedoch oft zeitaufwendige und energieintensive Verarbeitungsprozesse wie Sprühtrocknung oder Gefriertrocknung. Ein weiterer Nachteil pulverförmiger Pflanzengetränke besteht in der Staubentwicklung sowohl bei der Herstellung und der Abfüllung als auch beim Verzehr, da feiner Pulverstaub entstehen kann, welcher beim Einatmen ein potenzielles Gesundheitsrisiko darstellt. Um ein gleichmäßiges Auflösen des Pulvers in Wasser zu gewährleisten und eine milchähnliche Konsistenz zu erreichen, werden zudem häufig Emulgatoren und Stabilisatoren zugesetzt, welche ebenfalls den gesundheitlichen Mehrwert der Getränke beeinträchtigen können.

Im Stand der Technik sind Prozesse bekannt mittels welcher feste oder halbfeste Zusammensetzungen bereitgestellt werden können. Solche festen oder halbfesten Zusammensetzungen bieten dabei den Vorteil einer besseren Portionierbarkeit im Vergleich zu pulverförmigen Zusammensetzungen und eine geringere bzw. keine Staubentwicklung bei der Herstellung und Portionierung. Beispielsweise offenbart WO2023097074A1 mittels Schablonendrucks hergestellte Zusammensetzungen, welche Nahrungsergänzungsmittel, Vitamine, Mineralien und andere aktive Wirkstoffe umfassen. Hierbei wird eine Tinte, umfassend Materialien wie Pullulan und Glycerin, durch eine Schablone auf ein Trägersubstrat aufgetragen. Nach dem Druck wird das Produkt erhitzt, um es zu härten und die Haltbarkeit zu erhöhen.

Die Übertragung eines solchen Schablonendruckprozesses auf pflanzliche Zusammensetzungen wie beispielsweise Hafer-Zusammensetzungen ist jedoch mit zahlreichen Herausforderungen verbunden. Für den Schablonendruck, insbesondere für das Einbringen der Tinte bzw. Zusammensetzung in die Schablone, muss ein bestimmter Viskositätsbereich eingestellt werden. Dies gewährleistet, dass die Zusammensetzung während des Schablonendrucks weder zu fest und somit nicht fließfähig ist und nicht zu flüssig und somit ebenfalls schwer und nicht kontrollierbar druckbar ist. Da es sich bei pflanzlichen Zusammensetzungen um Naturprodukte handelt, kann es jedoch zu schwankenden Viskositäten bei Verwendung unterschiedlicher Ausgangsstoffe wie beispielsweise verschiedener Getreide- oder Nussarten oder auch innerhalb verschiedener Chargen der gleichen Ausgangsstoffe kommen, wodurch die Viskosität zunächst in einem zusätzlichen Prozessschritt vor der Durchführung des Schablonendrucks genau eingestellt werden muss. Weiterhin ist der für den Schablonendruck optimale Viskositätsbereich üblicherweise mit einem hohen Flüssigkeitsgehalt der Zusammensetzung verbunden, welcher die Weiterverarbeitung und die Haltbarkeit des so hergestellten Produktes beeinträchtigen. Im Anschluss an den Schablonendruck ist es somit notwendig die in Form gebrachten pflanzlichen Zusammensetzungen auf eine geringere Restfeuchte zu trocknen. Dies ist in der Regel durch ein zeit- und energieintensives Trocknen im Batchverfahren beispielsweise in einem Konvektionsofen notwendig, da es beim Trocknen von Lebensmittelzusammensetzungen wie pflanzenbasierten Zusammensetzungen häufig zur Bildung einer Oberflächenhaut kommt, welche das weitere Entweichen von Feuchtigkeit aus den tieferen Schichten der Zusammensetzung behindert. Dies führt zu einer ineffizienten Trocknung, da die Feuchtigkeit in den tieferen Schichten eingeschlossen bleibt und der Trocknungsprozess verlangsamt wird. Weiterhin basiert ein solches Schablonendruckverfahren auf einer Vielzahl von Einzelschritten, welche teilweise schwer automatisierbar sind. Somit handelt es sich bei dem Schablonendruck von pflanzlichen Zusammensetzungen um ein schwer skalierbares Verfahren, welches zu hohen Personalkosten führt und es nicht ermöglicht große Produktionsmengen der pflanzenbasierten Zusammensetzung herzustellen.

Im Lichte des Standes der Technik besteht somit der Bedarf für ein Herstellungsverfahren welches eine effiziente, kostengünstige, energieeffiziente und skalierbare Herstellung nicht-flüssiger pflanzenbasierter Zusammensetzungen ermöglicht, welche eine hohe Haltbarkeit aufweisen, kostengünstig und umweltschonend transportiert werden können und die einfache Herstellung eines flüssigen pflanzenbasierten Getränkes ermöglichen.

### ZUSAMMENFASSUNG DER ERFINDUNG

Aufgabe der vorliegenden Erfindung war es die Nachteile des Standes der Technik zu beseitigen und ein Verfahren bereitzustellen, das eine reproduzierbare, kostengünstige, energieeffiziente und skalierbare Herstellung nicht-flüssiger Mahlerzeugnis-Zusammensetzungen für die Herstellung flüssiger Mahlerzeugnis-Zusammensetzungen ermöglicht.

Dabei war es eine weitere Aufgabe der vorliegenden Erfindung ein Verfahren bereitzustellen, dass die Herstellung nicht-flüssiger Mahlerzeugnis-Zusammensetzungen für die Herstellung flüssiger Mahlerzeugnis-Zusammensetzungen ermöglicht, welche eine hohe Haltbarkeit aufweisen und gute Transportierbarkeit und Lagerbarkeit aufweisen.

Dabei war es eine weitere Aufgabe der vorliegenden Erfindung ein Verfahren bereitzustellen, dass die Herstellung nicht-flüssiger Mahlerzeugnis-Zusammensetzungen für die Herstellung flüssiger Mahlerzeugnis-Zusammensetzungen ermöglicht, welche eine gute Portionierbarkeit aufweisen und keine Staubentwicklung zeigen.

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einem Aspekt betrifft die Erfindung ein Verfahren zur Herstellung einer nicht-flüssigen Mahlerzeugnis-Zusammensetzung für die Herstellung einer flüssigen Mahlerzeugnis-Zusammensetzung, umfassend
i. Bereitstellen einer Paste enthaltend ein Mahlerzeugnis, Wasser und ein Pflanzenfett, wobei die Paste 5 bis 50 Gew.-% Wasser und 2 bis 10 Gew.-% Pflanzenfett enthält, bezogen auf das Gesamtgewicht der Paste,
ii. Formen der Paste (i.) zu einem Strang.

In einer Ausführungsform umfasst die Paste 5 bis 50 Gew.-% Wasser und 2 bis 10 Gew.-% Pflanzenfett, wie beispielsweise 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 oder 50 Gew.-% Wasser und 2, 2.5, 3, 3.5, 4, 4.5, 5, 5.5, 6, 6.5, 7,7.5, 8, 8.5, 9, 9.5 oder 10 Gew.-% Pflanzenfett, vorzugsweise 5 bis 40 Gew.-% Wasser und 2 bis 8 Gew.-% Pflanzenfett, besonders vorzugsweise 5 bis 30 Gew.-% Wasser und 2 bis 6 Gew.-% Pflanzenfett.

In einer Ausführungsform umfasst die Paste 5 bis 50 Gew.-% Wasser. In einer Ausführungsform umfasst die Paste 5 bis 40 Gew.-% Wasser. In einer Ausführungsform umfasst die Paste 5 bis 30 Gew.-% Wasser. In einer Ausführungsform umfasst die Paste 5 bis 20 Gew.-% Wasser. In einer Ausführungsform umfasst die Paste 5 bis 15 Gew.-% Wasser. In einer Ausführungsform umfasst die Paste 5 bis 12 Gew.-% Wasser. In einer Ausführungsform umfasst die Paste 5 bis 10 Gew.-% Wasser.

In einer Ausführungsform umfasst die Paste 10 bis 50 Gew.-% Wasser. In einer Ausführungsform umfasst die Paste 10 bis 40 Gew.-% Wasser. In einer Ausführungsform umfasst die Paste 10 bis 30 Gew.-% Wasser. In einer Ausführungsform umfasst die Paste 10 bis 20 Gew.-% Wasser. In einer Ausführungsform umfasst die Paste 10 bis 15 Gew.-% Wasser. In einer Ausführungsform umfasst die Paste 10 bis 12 Gew.-% Wasser.

In einer Ausführungsform umfasst die Paste 2 bis 10 Gew.-% Pflanzenfett. In einer Ausführungsform umfasst die Paste 2 bis 8 Gew.-% Pflanzenfett. In einer Ausführungsform umfasst die Paste 2 bis 6 Gew.-% Pflanzenfett.

In einer Ausführungsform umfasst die Paste 4 bis 10 Gew.-% Pflanzenfett. In einer Ausführungsform umfasst die Paste 4 bis 8 Gew.-% Pflanzenfett. In einer Ausführungsform umfasst die Paste 4 bis 6 Gew.-% Pflanzenfett.

In einer Ausführungsform betrifft die Erfindung ein Verfahren zur Herstellung einer nicht-flüssigen pflanzenbasierten Mahlerzeugnis-Zusammensetzung für die Herstellung einer flüssigen pflanzenbasierten Mahlerzeugnis-Zusammensetzung, umfassend
i. Bereitstellen einer Paste enthaltend ein Mahlerzeugnis, Wasser und ein Pflanzenfett, wobei die Paste 5 bis 50 Gew.-% Wasser, vorzugsweise 5 bis 15 Gew.-% Wasser, besonders vorzugsweise 5 bis 12 Gew.-% Wasser, ganz beosnders vorzugsweise 5 bis 10 Gew.-% Wasser,und 2 bis 10 Gew.-% Pflanzenfett enthält, bezogen auf das Gesamtgewicht der Paste,
ii. Formen der Paste (i.) zu einem Strang.

In einer Ausführungsform betrifft die Erfindung ein Verfahren zur Herstellung einer nicht-flüssigen, teigartigen pflanzenbasierten Mahlerzeugnis-Zusammensetzung für die Herstellung einer flüssigen pflanzenbasierten Mahlerzeugnis-Zusammensetzung, umfassend
i. Bereitstellen einer Paste enthaltend ein Mahlerzeugnis, Wasser und ein Pflanzenfett, wobei die Paste 5 bis 50 Gew.-% Wasser, vorzugsweise 5 bis 15 Gew.-% Wasser, besonders vorzugsweise 5 bis 12 Gew.-% Wasser, ganz besonders vorzugsweise 5 bis 10 Gew.-% Wasser, und 2 bis 10 Gew.-% Pflanzenfett enthält, bezogen auf das Gesamtgewicht der Paste,
ii. Formen der Paste (i.) zu einem Strang.

Das Verfahren der vorliegenden Erfindung ermöglicht vorteilhafterweise eine besonders energie- und zeiteffiziente Herstellung einer nicht-flüssigen Mahlerzeugniszusammensetzung, welche für die Auflösung in einer verzehrbaren Flüssigkeit zur Herstellung einer flüssigen Mahlerzeugniszusammensetzung wie beispielsweise einem pflanzenbasierten Getränk als Alternative zu Kuhmilch geeignet ist.

Eine solche nicht-flüssige Mahlerzeugnis-Zusammensetzung ist dabei im Vergleich zu flüssigen Mahlerzeugniszusammensetzungen besonders einfach in der Lagerung und reduziert den Energieverbrauch im Transport aufgrund des reduzierten Transportgewichts und -volumens im Vergleich zu flüssigen Produkten erheblich. Die nicht-flüssige Zusammensetzung ermöglicht zudem vorteilhafterweise eine im Vergleich zu flüssigen Zusammensetzungen längere Haltbarkeit, ohne notwendigerweise Konservierungsmitteln oder Stabilisatoren zu umfassen.

Darüber hinaus kann die nicht-flüssige Zusammensetzung individuell und einfach ohne Staubentwicklung portioniert werden. Dies ermöglicht je nach Bedarf die Herstellung einer individuellen Menge einer flüssigen Mahlerzeugniszusammensetzung aus der nicht-flüssigen Zusammensetzung und führt unter anderem zu weniger Abfall und einer geringeren Umweltbelastung, da nur die tatsächlich benötigte Menge zubereitet wird. Zudem kann das Verhältnis der nicht-flüssigen Zusammensetzung und der verwendeten verzehrbaren Flüssigkeit bei der Herstellung der flüssigen Zusammensetzung individuell angepasst werden, um so die Dicke und Konsistenz der flüssigen Zusammensetzung anzupassen.

Die nicht flüssige, teigartige Form der Zusammensetzung führt zudem vorteilhafterweise zu einer gleichmäßigen Auflösung und/oder Dispergierung in einer verzehrbaren Flüssigkeit, was im Gegensatz zu den pulverförmigen Zusammensetzungen im Stand der Technik eine homogene und cremige Konsistenz ohne Klumpenbildung und sandige Textur ermöglicht. Dies verbessert das Trinkgefühl erheblich.

Durch die Bereitstellung einer Paste, welche den bevorzugten Anteil an Öl und Wasser enthält, ist es überraschenderweise besonders gut möglich einen Strang aus der Paste zu formen, welcher anschließend sehr einfach portioniert und direkt verpackt werden kann. Weiterhin ist vorteilhafterweise nach dem Formen des Stranges keine weitere Trocknung zur Reduzierung des Flüssigkeitsgehaltes des Stranges notwendig. Dies kann bei höheren Flüssigkeitsanteilen insbesondere notwendig sein, um eine ausreichende Haltbarkeit zu gewährleisten und eine gute Portionierbarkeit und Verpackbarkeit und somit auch spätere Anwendbarkeit für den Endverbraucher zu ermöglichen. Eine solche Trocknung ist jedoch bei Zusammensetzungen, welche auf Mahlerzeugnissen wie beispielsweise Hafer-Mahlerzeugnissen basieren sehr zeit- und energieintensiv, da es bei der Trocknung solcher Zusammensetzungen zu einer Hautbildung an der Oberfläche kommen kann, welche das Entweichen weiterer Flüssigkeit aus der Zusammensetzung verringert oder sogar verhindert und somit die notwendige Trocknungszeit für die ausreichende Reduzierung des Flüssigkeitsgehaltes erheblich verlängert. Weiterhin kann die Hautbildung zu einer veränderten Oberfläche der Zusammensetzung führen, welche die Auflösung und Dispergierung in einer Flüssigkeit und somit die Herstellung einer flüssigen Zusammensetzung beeinträchtigt, insbesondere erschwert und verlangsamt.

Durch die fehlende Notwendigkeit der Trocknung nach der Formung des Stranges ermöglicht das Verfahren der vorliegenden Erfindung, somit vorteilhafterweise eine schnellere und energieeffizientere Herstellung einer nicht-flüssigen Mahlerzeugnis-Zusammensetzung, welche zudem sehr gute Auflösungs- und Dispergiereigenschaften in Flüssigkeiten aufweist und somit eine besonders einfache Herstellung einer flüssigen Mahlerzeugnis-Zusammensetzung daraus ermöglicht.

In einer Ausführungsform umfasst das Verfahren zusätzlich (iii.) ein Zerteilen des Strangs in einzelne Stücke.

In einer Ausführungsform wird vor dem Zerteilen eine Unterlage, vorzugsweise ein Papier, besonders vorzugsweise ein Backpapier unter den geformten Strang untergelegt. In einer Ausführungsform wird die Unterlage gemeinsam mit dem Strang zerteilt.

Vorteilhafterweise kann der mittels des Verfahrens hergestellte Strang besonders einfach, beispielsweise mittels eines Schneidewerkzeuges wie eines Messers zerteilt und genau portioniert werden. Hierbei kommt es vorteilhafterweise bei der Portionierung und der anschließenden Verpackung zu keiner potenziell gesundheitsschädlichen Staubentwicklung wie beispielsweise bei der Portionierung und Abfüllung pulverförmiger Zusammensetzungen.

In einer Ausführungsform liegt die nicht-flüssige Zusammensetzung nach der Zerteilung in einer blattförmigen, würfelartigen, quaderförmigen, kreisförmigen oder kugelförmigen Form vor.

In einer Ausführungsform liegen die einzelnen Stücke in einer blattförmigen, würfelartigen, quaderförmigen, kreisförmigen oder kugelförmigen Form vor.

In einer Ausführungsform ist das Verfahren dadurch gekennzeichnet, dass die Bereitstellung der Paste umfasst
i. Bereitstellen eines Pulvers enthaltend ein Mahlerzeugnis,
ii. Zugabe von 2 bis 10 Gew.-% Pflanzenfett zu (i.) und Mischen in einer Mischvorrichtung, und
iii. Zugabe von 5 bis 50 Gew.-% Wasser, vorzugsweise 5 bis 15 Gew.-% Wasser, besonders vorzugsweise 5 bis 12 Gew.-% Wasser, ganz besonders vorzugsweise 5 bis 10 Gew.-% Wasser, zu (ii.), und Mischen in einer Mischvorrichtung.

In einer Ausführungsform ist das Verfahren dadurch gekennzeichnet, dass die Bereitstellung der Paste umfasst
i. Bereitstellen eines Pulvers enthaltend ein Mahlerzeugnis,
ii. Zugabe von 2 bis 10 Gew.-% Pflanzenfett zu (i.), wie beispielsweise 2, 2.5, 3, 3.5, 4, 4.5, 5, 5.5, 6, 6.5, 7,7.5, 8, 8.5, 9, 9.5 oder 10 Gew.-% Pflanzenfett, vorzugsweise 2 bis 8 Gew.-% Pflanzenfett, besonders vorzugsweise 2 bis 6 Gew.-% Pflanzenfett und Mischen in einer Mischvorrichtung, und
iii. Zugabe von 5 bis 50 Gew.-% Wasser zu (ii.), wie beispielsweise 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 oder 50 Gew.-% Wasser, vorzugsweise 5 bis 15 Gew.-% Wasser, besonders vorzugsweise 5 bis 12 Gew.-% Wasser, ganz besonders vorzugsweise 5 bis 10 Gew.-% Wasser, und Mischen in einer Mischvorrichtung.

Für die Bereitstellung der Paste für das erfindungsgemäße Verfahren kann vorteilhafterweise von einem flüssigen als auch von einem pulverförmigen Mahlerzeugnis ausgegangen werden, wodurch das erfindungsgemäße Verfahren besonders flexibel in Bezug auf die verwendbaren Ausgangsstoffe ist. Hierbei kann es sich beispielsweise um feste Ausgangsstoffe wie beispielsweise bereits enzymatisch behandeltes Haferpulver handeln oder beispielsweise flüssige Zusammensetzungen, welche enzymatisch behandelten Hafer enthalten, handeln.

Bei der Verwendung fester Ausgangsstoffe kann vorteilhafterweise die zugegebene Menge an Pflanzenfett und Wasser genau kontrolliert werden, sodass eine Paste mit dem bevorzugten Anteil an Pflanzenfett und Wasser ohne einen weiteren Trocknungsschritt bereitgestellt werden kann, welche sich besonders gut für die weitere Verarbeitung (das Formen eines Stranges aus der Paste) eignet. Weiterhin sind feste Ausgangsstoffe besonders gut haltbar und lagerbar und können für die Produktion der nicht-flüssigen Mahlerzeugnis-Zusammensetzung besonders gut auf Vorrat gelagert werden.

In einer Ausführungsform ist die Mischvorrichtung in Schritt (ii.) und/oder (iii.) ausgewählt aus der Gruppe bestehend aus einem Planetenrührer, einem Universalmischer und einem Cutter. In einer Ausführungsform ist die Mischvorrichtung in Schritt (ii.) und/oder (iii.) ausgewählt aus der Gruppe bestehend aus einem Planetenrührer mit einen Schneebesen-Aufsatz, einem Universalmischer mit zwei Messern und einem Cutter.

In einer Ausführungsform ist die Mischvorrichtung in Schritt (ii.) ausgewählt aus der Gruppe bestehend aus einem Planetenrührer mit einem Schneebesen-Aufsatz, einem Universalmischer mit zwei Messern und einem Cutter und die Mischvorrichtung in Schritt (iii.) ein Planetenrührer mit einem Schneebesen-Aufsatz.

In einer Ausführungsform wird die Mischung in Schritt (ii.) und/oder (iii.) für 10 bis 240 s gemischt, vorzugsweise für 20 bis 120 s, besonders vorzugsweise für 30 bis 90 s, ganz besonders vorzugsweise für 30 bis 60 s. In einer Ausführungsform wird die Mischung in Schritt (ii.) und/oder (iii.) für 10 bis 240 s gemischt, wie beispielsweise 10, 15, 20, 25, 30, 35, 40, 45, 50, 55, 60, 65, 70, 75, 80, 85, 90, 95, 100, 105, 110, 120, 130, 140, 150, 160, 170, 180, 190, 200, 210, 220, 230 oder 240 s.

In einer Ausführungsform ist die Mischvorrichtung in Schritt (ii.) und (iii.) ein Universalmischer mit zwei Messern und die Mischung wird in Schritt (ii.) und (iii.) für insgesamt 10 bis 240 s gemischt.

In einer Ausführungsform ist das Verfahren dadurch gekennzeichnet, dass die Bereitstellung der Paste umfasst
i. Bereitstellen einer flüssigen Zusammensetzung enthaltend ein Mahlerzeugnis,
ii. Zugabe von 2 bis 10 Gew.-% Pflanzenfett zu (i.) und Mischen in einer Mischvorrichtung, und
iii. Aufkonzentrieren der Mischung gemäß (ii.), wobei die Mischung nach dem Aufkonzentrieren 5 bis 50 Gew.-% Wasser, vorzugsweise 5 bis 15 Gew.-% Wasser, besonders vorzugsweise 5 bis 12 Gew.-% Wasser, ganz besonders vorzugsweise 5 bis 10 Gew.-% Wasser, und 2 bis 10 Gew.-% Pflanzenfett enthält, bezogen auf das Gesamtgewicht der Mischung.

In einer Ausführungsform ist das Verfahren dadurch gekennzeichnet, dass die Bereitstellung der Paste umfasst
i. Bereitstellen einer flüssigen Zusammensetzung enthaltend ein Mahlerzeugnis,
ii. Zugabe von 2 bis 10 Gew.-% Pflanzenfett zu (i.), wie beispielsweise 2, 2.5, 3, 3.5, 4, 4.5, 5, 5.5, 6, 6.5, 7,7.5, 8, 8.5, 9, 9.5 oder 10 Gew.-% Pflanzenfett, vorzugsweise 2 bis 8 Gew.-% Pflanzenfett, besonders vorzugsweise 2 bis 6 Gew.-% Pflanzenfett, und Mischen in einer Mischvorrichtung, und
iii. Aufkonzentrieren der Mischung gemäß (ii.), wobei die Mischung nach dem Aufkonzentrieren 5 bis 50 Gew.-% Wasser, wie beispielsweise 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 oder 50 Gew.-% Wasser, vorzugsweise 5 bis 15 Gew.-% Wasser, besonders vorzugsweise 5 bis 12 Gew.-% Wasser, und 2 bis 10 Gew.-% Pflanzenfett, wie beispielsweise 2, 2.5, 3, 3.5, 4, 4.5, 5, 5.5, 6, 6.5, 7,7.5, 8, 8.5, 9, 9.5 oder 10 Gew.-% Pflanzenfett, vorzugsweise 2 bis 8 Gew.-% Pflanzenfett, besonders vorzugsweise 2 bis 6 Gew.-% Pflanzenfett enthält, bezogen auf das Gesamtgewicht der Mischung.

Wie oben erläutert kann für die Bereitstellung der Paste für das erfindungsgemäße Verfahren vorteilhafterweise von einem flüssigen als auch von einem pulverförmigen Mahlerzeugnis ausgegangen werden, wodurch das erfindungsgemäße Verfahren besonders flexibel in Bezug auf die verwendbaren Ausgangsstoffe ist.

Bei der Verwendung flüssiger Ausgangsstoffe ist vorteilhafterweise eine besonders gute Mischbarkeit des flüssigen Ausgangsstoffes wie beispielsweise einer enzymatisch behandelten Hafer-Zusammensetzung mit dem Pflanzenfett und dem Wasser gegeben. Weiterhin können weitere optionale Inhaltsstoffe wie beispielsweise Schaumbildner, Geschmackstoffe oder Emulgatoren einfach zugegeben werden und eine homogene Mischung erhalten werden. Weiterhin wird bei der Verwendung flüssiger Ausgangsstoffe eine Staubbildung, wie sie bei pulverförmigen festen Ausgangsstoffen gegeben sein kann, vermieden. Dadurch wird nicht nur ein mögliches Gesundheitsrisiko bei der Herstellung vermieden, sondern auch mögliche Ungenauigkeiten bei der Dosierung der Inhaltstoffe durch die Staubbildung.

In einer Ausführungsform umfasst die Bereitstellung der Paste die Zugabe von 5 bis 50 Gew.-% Wasser. In einer Ausführungsform umfasst die Bereitstellung der Paste die Zugabe von 5 bis 40 Gew.-% Wasser. In einer Ausführungsform umfasst die Bereitstellung der Paste die Zugabe von 5 bis 30 Gew.-% Wasser. In einer Ausführungsform umfasst die Bereitstellung der Paste die Zugabe von 5 bis 20 Gew.-% Wasser. In einer Ausführungsform umfasst die Bereitstellung der Paste die Zugabe von 5 bis 15 Gew.-% Wasser. In einer Ausführungsform umfasst die Bereitstellung der Paste die Zugabe von 5 bis 12 Gew.-% Wasser. In einer Ausführungsform umfasst die Bereitstellung der Paste die Zugabe von 5 bis 10 Gew.-% Wasser.

In einer Ausführungsform umfasst die Bereitstellung der Paste die Zugabe von 10 bis 50 Gew.-% Wasser. In einer Ausführungsform umfasst die Bereitstellung der Paste die Zugabe von 10 bis 40 Gew.-% Wasser. In einer Ausführungsform umfasst die Bereitstellung der Paste die Zugabe von 10 bis 30 Gew.-% Wasser. In einer Ausführungsform umfasst die Bereitstellung der Paste die Zugabe von 10 bis 20 Gew.-% Wasser. In einer Ausführungsform umfasst die Bereitstellung der Paste die Zugabe von 10 bis 15 Gew.-% Wasser. In einer Ausführungsform umfasst die Bereitstellung der Paste die Zugabe von 10 bis 12 Gew.-% Wasser.

In einer Ausführungsform umfasst die Bereitstellung der Paste die Zugabe von 2 bis 10 Gew.-% Pflanzenfett. In einer Ausführungsform umfasst die Bereitstellung der Paste die Zugabe von 2 bis 8 Gew.-% Pflanzenfett. In einer Ausführungsform umfasst die Bereitstellung der Paste die Zugabe von 2 bis 6 Gew.-% Pflanzenfett.

In einer Ausführungsform umfasst die Bereitstellung der Paste die Zugabe von 4 bis 10 Gew.-% Pflanzenfett. In einer Ausführungsform umfasst die Bereitstellung der Paste die Zugabe von 4 bis 8 Gew.-% Pflanzenfett. In einer Ausführungsform umfasst die Bereitstellung der Paste die Zugabe von 4 bis 6 Gew.-% Pflanzenfett.

In einer Ausführungsform enthält die Mischung nach dem Aufkonzentrieren 5 bis 50 Gew.-% Wasser. In einer In einer Ausführungsform enthält die Mischung nach dem Aufkonzentrieren 5 bis 40 Gew.-% Wasser. In einer Ausführungsform enthält die Mischung nach dem Aufkonzentrieren 5 bis 30 Gew.-% Wasser. In einer Ausführungsform enthält die Mischung nach dem Aufkonzentrieren 5 bis 20 Gew.-% Wasser. In einer Ausführungsform enthält die Mischung nach dem Aufkonzentrieren 5 bis 15 Gew.-% Wasser. In einer Ausführungsform enthält die Mischung nach dem Aufkonzentrieren 5 bis 12 Gew.-% Wasser. In einer Ausführungsform enthält die Mischung nach dem Aufkonzentrieren 5 bis 10 Gew.-% Wasser.

In einer Ausführungsform enthält die Mischung nach dem Aufkonzentrieren 10 bis 50 Gew.-% Wasser. In einer Ausführungsform enthält die Mischung nach dem Aufkonzentrieren 10 bis 40 Gew.-% Wasser. In einer Ausführungsform enthält die Mischung nach dem Aufkonzentrieren 10 bis 30 Gew.-% Wasser. In einer Ausführungsform enthält die Mischung nach dem Aufkonzentrieren 10 bis 20 Gew.-% Wasser. In einer Ausführungsform enthält die Mischung nach dem Aufkonzentrieren 10 bis 15 Gew.-% Wasser. In einer Ausführungsform enthält die Mischung nach dem Aufkonzentrieren 10 bis 12 Gew.-% Wasser.

In einer Ausführungsform enthält die Mischung nach dem Aufkonzentrieren 2 bis 10 Gew.-% Pflanzenfett. In einer Ausführungsform enthält die Mischung nach dem Aufkonzentrieren 2 bis 8 Gew.-% Pflanzenfett. In einer Ausführungsform enthält die Mischung nach dem Aufkonzentrieren 2 bis 6 Gew.-% Pflanzenfett.

In einer Ausführungsform enthält die Mischung nach dem Aufkonzentrieren 4 bis 10 Gew.-% Pflanzenfett. In einer Ausführungsform enthält die Mischung nach dem Aufkonzentrieren 4 bis 8 Gew.-% Pflanzenfett. In einer Ausführungsform enthält die Mischung nach dem Aufkonzentrieren 4 bis 6 Gew.-% Pflanzenfett.

In einer Ausführungsform ist das Verfahren dadurch gekennzeichnet, dass die Mischung unter Vakuum bei einer Temperatur von 50 bis 80 °C, vorzugsweise 55 bis 75 °C, besonders vorzugsweise 50 bis 70 °C und einem Druck von 10 bis 40 mbar, vorzugsweise 15 bis 35 mbar, besonders vorzugsweise 20 bis 30 mbar, und Verwendung eines Wendel-Mischwerkzeuges aufkonzentriert wird.

In einer Ausführungsform ist das Verfahren dadurch gekennzeichnet, dass die Mischung unter Vakuum bei einer Temperatur von 50 bis 80 °C, beispielsweise 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, oder 80 °C und einem Druck von 10 bis 40 mbar, beispielsweise 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 oder 40 mbar und Verwendung eines Wendel-Mischwerkzeuges aufkonzentriert wird.

In einer Ausführungsform ist das Verfahren dadurch gekennzeichnet, dass die Mischung unter Vakuum bei einer Temperatur von 70 °C und einem Druck von 20 bis 30 mbar, und Verwendung eines Wendel-Mischwerkzeuges aufkonzentriert wird.

In einer Ausführungsform umfasst das Wendel-Mischwerkzeug einen Behälter und eine oder mehrere Wendeln.

In einer Ausführungsform umfasst das Wendel-Mischwerkzeug eine oder mehrere beheizte Wendeln. In einer Ausführungsform haben die eine oder mehrere beheizte Wendeln eine Temperatur von 50 bis 80 °C, beispielsweise 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, oder 80 °C.

In einer Ausführungsform ist der Behälter des Wendel-Mischwerkzeuges beheizt. In einer Ausführungsform hat der Behälter eine Temperatur von 50 bis 80 °C, beispielsweise 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, oder 80 °C. In einer Ausführungsform hat der Behälter eine Temperatur von 70 °C.

In einer Ausführungsform umfasst das Wendel-Mischwerkzeug eine oder mehrere beheizte Wendeln und einen beheizten Behälter. In Ausführungsform haben die eine oder mehrere beheizten Wendeln und der Behälter eine Temperatur von 50 bis 80 °C, beispielsweise 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, oder 80 °C.

In einer Ausführungsform beträgt der Unterschied zwischen der Temperatur der einen oder mehreren beheizten Wendeln und des Behälters zu Beginn des Mischprozesses mehr als 5 °C, borzugsweise mehr als 10 °C, besonders vorzugsweise mehr als 15 °C.

Die Verwendung eines Wendel-Mischwerkzeuges und die Aufkonzentrierung unter Vakuum ermöglicht vorteilhafterweise eine besonders kontrollierte und effiziente Aufkonzentrierung der Paste, sodass diese nach dem Aufkonzentrieren einen Pflanzenfett- und Wassergehalt im bevorzugten Bereich aufweist und somit für die weitere Verarbeitung, insbesondere für die Formung eines Strangs besonders gut geeignet ist. Hierbei wird durch die Verwendung des Wendel-Mischwerkzeuges und die Anwendung eines Vakuums unter den bevorzugten Druck- und Temperaturbedingungen insbesondere die Hautbildung bei der Trocknung der Paste vermieden, wodurch die Aufkonzentrierung besonders zeit- und energieeffizient ist und eine Veränderung der Oberfläche und dadurch verschlechterte spätere Auflösung und/oder Dispergierbarkeit in einer verzehrbaren Flüssigkeit verhindert werden. Wendel-Mischwerkzeuge: bewirken eine Aufwärtsschraubung der Mischgüter in der Peripherie und eine Abwärtsströmung im Zentrum, wodurch eine optimale Durchmischung sowie Wärmeübergang erreicht werden.

Weiterhin wird durch die Senkung des Siedepunktes im Vakuum vorteilhafterweise die in der Mischung enthaltene Flüssigkeit, insbesondere Wasser, bereits bei niedrigen Temperaturen verdampft und so aus der Mischung entfernt bzw. der Flüssigkeitsgehalt für die weitere Verarbeitung auf den gewünschten Bereich eingestellt. Dadurch wird der Aufkonzentrierungsprozess vorteilhafterweise beschleunigt und hitzeempfindliche Inhaltsstoffe werden nicht zersetzt und geschont. Mittels Vakuumtrocknung wird somit eine besonders effiziente und schonende Aufkonzentrierung der Paste erreicht. Zudem führt die Aufkonzentrierung unter Vakuum bei niedrigen Temperaturen zu einer geringeren Oxidation der in der Mischung enthaltenen Inhaltsstoffe, beispielsweise Inhaltsstoffe des Mahlerzeugnisses, und somit zu einer erhöhten Produktqualität und Haltbarkeit.

In einer Ausführungsform ist das Verfahren dadurch gekennzeichnet, dass das Mahlerzeugnis hergestellt ist aus Getreide, Pseudogetreide, Hülsenfrüchten, Früchten von Knöterichgewächsen, Hanfgewächsen, Nüssen, Fruchtkapseln, Steinfrüchten und/oder Samen, vorzugsweise Getreide, besonders vorzugsweise Hafer.

In einer Ausführungsform ist das Verfahren dadurch gekennzeichnet, dass das Mahlerzeugnis hergestellt ist aus Getreide ausgewählt aus der Gruppe bestehend aus Hafer, Reis, Dinkel, Hirse, Roggen, Gerste, Mais, Einkorn, Triticale und Weizen, Pseudogetreide ausgewählt aus der Gruppe bestehend aus Quinoa, Amaranth, Chia und Teff, Hülsenfrüchten ausgewählt aus der Gruppe bestehend aus Soja, Erbsen, Lupine, Kichererbsen und Linsen, Früchten von Knöterichgewächsen, vorzugsweise Buchweizen, Hanfgewächsen wie vorzugsweise Hanf, Nüssen vorzugsweise ausgewählt aus der Gruppe bestehend aus Mandeln, Haselnüssen, Cashewnüssen, Macadamianüssen, Walnüssen, Paranüssen und Pekannüssen, Fruchtkapseln, Steinfrüchten wie vorzugsweise Kokosnuss, und/oder Samen ausgewählt aus der Gruppe bestehend aus Sesam, Leinsamen, Sonnenblumenkernen und Kürbiskernen, vorzugsweise aus Getreide, besonders vorzugsweise aus Hafer.

In einer Ausführungsform ist das Mahlerzeugnis hergestellt aus Getreide, vorzugsweise aus Hafer, und die Paste weist eine Viskosität von 75.000-90.000 mPa*s (gemessen mittels eines Brookfield Viskosimeters bei 5 rpm) auf, beispielsweise 75.000, 76.000, 77.000, 78.000, 79.000, 80.000, 81.000, 82.000, 83000, 84.000, 85.000, 86.000, 87.000, 88.000, 89.000 oder 90.000 mPa*s.

In einer Ausführungsform ist das Mahlerzeugnis hergestellt aus Getreide, vorzugsweise aus Hafer, und die Paste weist eine Dichte von 1.2 bis 1.5 g/cm³, vorzugsweise 1.25 bis 1.30 g/cm³, besonders vorzugsweise 1.26 bis 1.28 g/cm³, auf.

In einer Ausführungsform ist das Mahlerzeugnis hergestellt aus Nüssen, vorzugsweise Mandeln, und die Paste weist eine Viskosität von 12.000-20.000 mPa*s (gemessen mittels eines Brookfield Viskosimeters bei 5 rpm) auf, beispielsweise 12.000, 12.500, 13.000, 13.500, 14.000, 14.500, 15.000, 15.500, 16.000, 16.500, 17.000, 17.500, 18.000, 18.500, 19.000, 19.500 oder 20.000 mPa*s. In einer Ausführungsform ist das Verfahren dadurch gekennzeichnet, dass das Pflanzenfett ausgewählt ist aus der Gruppe bestehend aus Rapsöl, Sonnenblumenöl, Sojaöl, Maiskeimöl, Distelöl, Hanföl, Leinöl, Olivenöl, Kokosfett, Palmöl, Palmkernfett, Kakaobutter, Haselnussöl, Mandelöl, Walnussöl, Kürbiskernöl, Sesamöl, Weizenkeimöl und Avocadoöl, vorzugsweise Rapsöl.

In einer Ausführungsform ist das Verfahren dadurch gekennzeichnet, dass die Paste optional einen Schaumbildner, einen Geschmacksstoff, ein Verdickungsmittel, ein Bindemittel, ein Geliermittel, ein Konservierungsmittel, einen Säureregulator, einen Lebensmittelfarbstoff, einen Emulgator, einen Ballaststoff, ein Vitamin, ein Mineral, ein Probiotikum, Koffein, Kurkuma, Matcha, und/oder zusätzliche Proteine enthält.

In einer Ausführungsform ist das Verdickungs-, Binde- und/oder Geliermittel vorzugsweise ausgewählt aus der Gruppe bestehend aus Stärke, modifizierte Stärke, Glucomannane, Gellan, Agar Agar, Alginat, Pektin, Guar Gummi, Cellulose, Xanthan, Gummi Arabicum, Carrageen und Johannisbrotkernmehl.

In einer Ausführungsform ist der Ballaststoff aus einer Pflanzenfaser gewonnen, beispielsweise aus Weizen, Hafer, Leinsamen, Flohsamen, Chiasamen, Mais, Obstschalen wie beispielsweise von Äpfeln, Birnen und/oder Bananen, Wurzel- und Knollengemüse wie beispielsweise Karotten, Rüben und/oder Kartoffeln, und Leguminosen wie beispielsweise Linsen, Bohnen und/oder Kichererbsen.

In einer Ausführungsform sind die zusätzlichen Proteine ausgewählt aus der Gruppe bestehend aus Leguminosen-Proteinen wie beispielsweise Erbsenproteinen, Kichererbsenproteinen, Bohnenproteinen, wie beispielsweise Ackerbohnenproteinen, Linsenproteinen und/oder Lupinenproteinen, Reisproteinen, Nussproteinen, wie beispielsweise Mandelproteinen, und Saatenproteinen wie beispielsweise Proteinen aus Sonnenblumenkern, Kürbiskernen, Leinsamen, Chia und Hanfsamen.

In einer Ausführungsform ist der Emulgator ausgewählt aus der Gruppe bestehend aus Lecithin und Mono- und Diglyceriden.

In einer Ausführungsform ist der Säureregulatoren ausgewählt aus der Gruppe bestehend aus Zitronensäure, Natriumcitrat, Milchsäure, Weinsäure, Essigsäure, Ascorbinsäure und Kaliumhydrogencarbonat.

In einer Ausführungsform ist der Schaumbildner ausgewählt aus der Gruppe bestehend aus Natriumcarbonat und Saponinen, vorzugsweise ausgewählt aus der Gruppe bestehend aus Lecithin, Gellan-Gummi, Xanthan-Gummi, Guarkernmehl, Carrageen, Mono- und Diglyceride sowie pflanzlichen Saponinquellen vorzugsweise ausgewählt aus der Gruppe bestehend aus Quillaja-Saponinen, Yucca-Saponinen, Soja-Saponinen, Kichererbsen-Saponinen, Ginseng-Saponinen und Tee-Saponinen, Seifenkraut-Saponinen, Kreuzblütler-Saponinen, Primel-Saponinen und Bockshornklee-Saponinen.

In einer Ausführungsform ist das Vitamin ausgewählt aus der Gruppe bestehend aus Vitamin D, Vitamin B12, Vitamin B1, Vitamin B2, Vitamin B3, Vitamin B5, Vitamin B6, Vitamin B7, Vitamin B9, Vitamin A, Vitamin E, Vitamin K und Vitamin C.

In einer Ausführungsform ist das Mineral ausgewählt aus der Gruppe bestehend aus Calcium, Magnesium, Kalium, Eisen, Zink, Jod, Selen, Kupfer, Mangan und Phosphor.

In einer Ausführungsform ist der Geschmacksstoff ausgewählt aus der Gruppe bestehend aus Süßungsmitteln wie Zucker, Stevia, Agavensirup, Ahornsirup, Dattelsirup, Reissirup, Stevia, Yacon, Palmzucker, Xylit, Erythrit oder Aspartam, Salz, Säureregulatoren wie Zitronensäure, und Aromastoffe wie Vanille-Aroma, Kakao, Zimt, Fruchtaroma, Schokoladen-Aroma, Nuss-Aroma, Karamell-Aroma, Kaffee und Minze.

In einer Ausführungsform ist der Lebensmittelfarbstoff ausgewählt aus der Gruppe bestehend aus Beta-Carotin, Rote Beete, Kurkumin, Karamell, Paprikaextrakt, Anthocyane, Traubenschalen, Radieschen-Konzentrate und Spirulina.

In einer Ausführungsform ist das Probiotikum ausgewählt aus der Gruppe bestehend aus einem Lactobacillus-Stamm wie beispielsweise Lactobacillus acidophilus, Lactobacillus rhamnosus, Lactobacillus infanti und Lactobacillus casei, einem Saccharomyces-Stamm wie Saccharomyces boulardii, einem Bifidobakterium-Stamm wie Bifidobacterium bifidum, Bifidobacterium longum und Bifidobacterium lactis, Escherichia coli Nissle 1917 und Streptococcus thermophilus.

In einer Ausführungsform ist das Konservierungsmittel ausgewählt aus der Gruppe bestehend aus Kaliumsorbat, Natriumbenzoat, Kaliumdisulfit, Natriumbisulfit, Natriumnitrit, Natriumnitrat, Natriumacetat, Calciumpropionat, Ascorbinsäure (Vitamin C), Erythorbinsäure, Phosphate, Milchsäure, Butylhydroxyanisol (BHA) und Butylhydroxytoluol (BHT).

In einer Ausführungsform ist das Verfahren dadurch gekennzeichnet, dass die Paste mittels eines Rotationsmittels zu einem Strang geformt wird, wobei durch das Rotationsmittel vorzugsweise ein rotativer Kraftaufwand auf die Paste ausgeübt wird.

In einer Ausführungsform ist das Verfahren dadurch gekennzeichnet, dass das Rotationsmittel eine Walze, eine Rolle, eine Extruderschnecke, eine Pumpe und/oder ein Vakuumfüller ist.

Die Verwendung eines Rotationsmittels wie eines Extruders oder eines Vakuumfüllers für das Formen des Stranges aus der Paste ermöglicht eine besondere Effizienz und homogene Formung des Stranges. Insbesondere ermöglichen Formverfahren, welche auf einem Rotationsmittel basieren, die Formung eines endlosen Stranges und somit besonders gut automatisierbar und damit zeit- und kosteneffizient.

In einer Ausführungsform ist das Verfahren dadurch gekennzeichnet, dass das Formen der Paste zu einem Strang umfasst
i. Verdichten der Paste in einem Extruder, und
ii. Extrudieren der verdichteten Paste durch eine Matrize, wodurch der Strang geformt wird.

In einer Ausführungsform ist das Verfahren dadurch gekennzeichnet, dass
a. der Extruder mindestens eine Extruderschnecke mit 2 bis 10 Windungen, vorzugsweise 3 bis 7 Windungen, besonders vorzugsweise 3 bis 4 Windungen aufweist, und/oder
b. die Matrize einen Spalt mit einer Schlitzbreite zwischen 10 und 1200 mm aufweist, vorzugsweise zwischen 100 und 800 mm, besonders vorzugsweise zwischen 150 und 300 mm.

In einer Ausführungsform ist das Verfahren dadurch gekennzeichnet, dass
a. der Extruder mindestens eine Extruderschnecke mit 2 bis 10 Windungen, wie beispielsweise 2, 3, 4, 5, 6, 7, 8, 9 oder 10 Windungen, vorzugsweise 3 bis 7 Windungen, besonders vorzugsweise 3 bis 4 Windungen aufweist, und/oder
b. die Matrize einen Spalt mit einer Schlitzbreite zwischen 10 und 1200 mm aufweist, wie beispielsweise 10, 20, 30, 40, 50, 60, 70, 80, 90, 100, 110, 120, 130, 140, 150, 160, 170, 180, 190, 200, 250, 300, 350, 400, 450, 500, 550, 600, 650, 700, 750, 800, 850, 900, 950, 1000, 1050, 1110, 1150 oder 1200 mm, vorzugsweise zwischen 100 und 800 mm, besonders vorzugsweise zwischen 150 und 300 mm.

In einer Ausführungsform wird die Paste in einem Extruder bei einem Druck zwischen 2 und 200 bar verdichtet, vorzugsweise 5 bis 150 bar, besonders vorzugsweise 10 bis 100 bar. In einer Ausführungsform wird die Paste in einem Extruder bei einem Druck zwischen 2 und 200 bar verdichtet, wie beispielsweise 2, 5, 10, 20, 30, 40, 50, 60, 70, 80, 90, 100, 110, 120, 130, 140, 150, 160, 170, 180, 190 oder 200 bar.

In einer Ausführungsform weist der Extruder zwei Extruderschnecken mit 2 bis 10 Windungen, vorzugsweise 3 bis 7 Windungen, besonders vorzugsweise 3 bis 4 Windungen auf.

In einer Ausführungsform weist der Extruder drei Extruderschnecken mit 2 bis 10 Windungen, vorzugsweise 3 bis 7 Windungen, besonders vorzugsweise 3 bis 4 Windungen auf.

In einer Ausführungsform weist der Extruder einen runden Matrizenkopf auf.

In einer Ausführungsform ist das Verfahren dadurch gekennzeichnet, dass das Formen der Paste zu einem Strang umfasst
i. Verdichten der Paste in einer Kammer mittels eines Vakuumfüllers, und
ii. Pressen der verdichteten Paste durch eine Matrize, wodurch der Strang geformt wird, wobei die Matrize einen Spalt mit einer Schlitzbreite zwischen 10 bis 1200 mm aufweist, wie beispielsweise10, 20, 30, 40, 50, 60, 70, 80, 90, 100, 110, 120, 130, 140, 150, 160, 170, 180, 190, 200, 250, 300, 350, 400, 450, 500, 550, 600, 650, 700, 750, 800, 850, 900, 950, 1000, 1050, 1110, 1150 oder 1200 mm, vorzugsweise 200 bis 1000 mm, besonders vorzugsweise 300 bis 800 mm.

In einer Ausführungsform wird die Paste in der Kammer mittels des Vakuumfüllers bei einem Druck zwischen 2 und 200 bar verdichtet, vorzugsweise 5 bis 150 bar, besonders vorzugsweise 10 bis 100 bar. In einer Ausführungsform wird die Paste in der Kammer mittels des Vakuumfüllers bei einem Druck zwischen 2 und 200 bar verdichtet, wie beispielsweise 2, 5, 10, 20, 30, 40, 50, 60, 70, 80, 90, 100, 110, 120, 130, 140, 150, 160, 170, 180, 190 oder 200 bar.

In einer Ausführungsform weist der Vakuumfüller eine Matrize mit einem waagerechten Spalt auf.

In einer Ausführungsform ist das Verfahren dadurch gekennzeichnet, dass Formen der Paste zu einem Strang umfasst
i. Durchführen der Paste durch einen Walzenstuhl, wobei der Walzenstuhl mindestens zwei Walzen umfasst.

In einer Ausführungsform ist das Verfahren dadurch gekennzeichnet, dass Formen der Paste zu einem Strang umfasst
i. Durchführen der Paste durch einen Walzenstuhl, wobei der Walzenstuhl mindestens zwei Walzen umfasst, beispielsweise 2, 3, 4, 5, 6, 7, 8, 9, oder 10 Walzen.

In einer Ausführungsform sind eine oder mehrere der Walzen beheizt. In einer Ausführungsform haben die einen oder mehr beheizten Walzen eine Temperatur von 20 bis 50 °C, beispielsweise 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 oder 50°C.

In einer Ausführungsform haben die zwei oder mehr Walzen die gleiche Temperatur. In einer Ausführungsform haben zwei oder mehr der Walzen unterschiedliche Temperaturen.

Das Formen der Paste durch eine oder mehrere beheizte Walzen bei einer Temperatur von 20 bis 50 °C ermöglicht vorteilhafterweise das gleichmäßige und kontinuierliche Formen des Stranges bei einer optimalen Konsistenz der Paste ohne ein Verkleben bei der Durchführung durch die Walzen und ohne Denaturierung der in der Paste enthaltenen Proteine, wie beispielsweise Haferproteine.

In einer Ausführungsform ist das Verfahren dadurch gekennzeichnet, dass Formen der Paste zu einem Strang umfasst
i. Durchführen der Paste durch einen Walzenstuhl, wobei der Walzenstuhl zwei gegenläufige Walzen mit einer Kavität umfasst (Bonbonpresse).

In einer Ausführungsform sind eine oder mehrere der zwei gegenläufigen Walzen beheizt. In einer Ausführungsform haben die eine oder mehrere beheizten Walzen eine Temperatur von 20 bis 50 °C, beispielsweise 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 oder 50°C.

In einer Ausführungsform haben die zwei oder mehr gegenläufigen Walzen die gleiche Temperatur. In einer Ausführungsform haben zwei oder mehr der gegenläufigen Walzen unterschiedliche Temperaturen.

In einer Ausführungsform ist das Verfahren dadurch gekennzeichnet, dass Formen der Paste zu einem Strang umfasst
i. Durchführen der Paste durch einen Walzenstuhl, wobei der Walzenstuhl ein vertikaler Walzenstuhl ist und mindestens zwei Walzen und eine Mischvorrichtung umfasst.

In einer Ausführungsform wird in der Mischvorrichtung des vertikalen Walzenstuhls die Paste bereitgestellt.

In einer Ausführungsform sind eine oder mehrere der Walzen des vertikalen Walzenstuhls beheizt. In einer Ausführungsform haben die eine oder mehrere beheizte Walzen eine Temperatur von 20 bis 50 °C, beispielsweise 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 oder 50 °C.

In einer Ausführungsform haben die zwei oder mehr Walzen des vertikalen Walzenstuhls die gleiche Temperatur. In einer Ausführungsform haben zwei oder mehr der Walzen des vertikalen Walzenstuhls unterschiedliche Temperaturen.

In einer Ausführungsform umfasst das Verfahren zusätzlich ein Durchführen des Stranges durch mindestens einen Walzenstuhl, wobei der Walzenstuhl mindestens 2 Walzen umfasst und, die Walzen einen Abstand aufweisen, welcher kleiner ist als die Schlitzbreite des Spaltes der Matrize einer der vorherigen Ausführungsformen.

In einer Ausführungsform umfasst das Verfahren zusätzlich ein Durchführen des Stranges durch mindestens einen Walzenstuhl, wobei der Walzenstuhl mindestens 2 Walzen umfasst und, die Walzen einen Abstand aufweisen, welcher kleiner ist als die Schlitzbreite des Spaltes der Matrize, welche für das Formen des Stranges verwendet wurde.

In einer Ausführungsform wird der Strang durch zwei oder mehr Walzenstühle durchgeführt, wobei die zwei oder mehr Walzenstühle mindestens 2 Walzen umfassen und die Walzen des zweiten Walzenstuhles einen Abstand aufweisen, welcher kleiner ist als der des ersten Walzenstuhles und die Walzen jedes weiteren Walzenstuhles einen Abstand aufweisen, welcher kleiner ist als der Abstand der Walzen des vorhergehenden Walzenstuhles.

In einer Ausführungsform weist der Strang nach dem Durchführen durch einen oder mehrere Walzenstühle eine Dicke von 0.5 bis 10 mm auf, wie beispielsweise 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.5, 5.0, 5.5, 6.0, 6.5, 7.0, 7.5, 8.0, 8.5, 9.0, 9.5 oder 10 mm, vorzugsweise 0.8 bis 5 mm besonders vorzugsweise 1 bis 3 mm.

In einer Ausführungsform wird der Strang bei dem Durchführen durch einen oder mehrere Walzenstühle in Längsrichtung geteilt.

Das Durchführen des geformten Stranges durch einen Walzenstuhl (Kalibrierstation) ermöglicht vorteilhafterweise den Strang auf eine einheitliche Dicke einzustellen (Kalibrierung der Dicke) und so eine besonders gute Portionierbarkeit zu gewährleisten, da der Strang anschließend in gleich große und gleich schwere Stücke zerteilt und verpackt werden kann. Das Durchführen des Stranges durch einen Walzenstuhl stellt weiterhin ein besonders einfach ausführbares Verfahren für die Einstellung einer gleichmäßigen Dicke dar.

In einer Ausführungsform weist eine der Walzen eine Struktur auf der Oberfläche auf, vorzugsweise eine Rille, eine Linie, eine Kerbe, eine Prägung und/oder eine Rändelstruktur.

In einer Ausführungsform ist die Struktur ausgewählt aus der Gruppe bestehend aus einer Schrift, einer Linie, einem Bild oder Kombinationen davon.

In einer Ausführungsform umfasst die Struktur Informationen zur Haltbarkeit der nicht-flüssigen Mahlerzeugnis-Zusammensetzung, zur Herstellung einer flüssigen Mahlerzeugnis-Zusammensetzung aus der nicht-flüssigen Mahlerzeugnis-Zusammensetzung und/oder zur Portionierung der nicht-flüssigen Mahlerzeugnis-Zusammensetzung

In einer Ausführungsform ist die Struktur ausgewählt aus der Gruppe bestehend aus einer Schrift, einer Linie, einem Bild oder Kombinationen davon, und umfasst Informationen zur Haltbarkeit der nicht-flüssigen Mahlerzeugnis-Zusammensetzung, zur Herstellung einer flüssigen Mahlerzeugnis-Zusammensetzung aus der nicht-flüssigen Mahlerzeugnis-Zusammensetzung und/oder zur Portionierung der nicht-flüssigen Mahlerzeugnis-Zusammensetzung.

In einer Ausführungsform ist die Struktur ausgewählt aus der Gruppe bestehend aus einer Rille, Linie, Kerbe, Prägung, Rändelstruktur, einem Bild, einem Logo, einem Icon, einem Piktogramm, einem Emoticon und Kombinationen davon.

Die Verwendung mindestens einer Walze, welche eine Struktur aufweist, führt vorteilhafterweise zu einem verbesserten Einziehen des Stranges in den Walzenstuhl, wodurch eine besonders effiziente Einstellung einer gleichmäßigen Dicke des Stranges (Kalibrierung) erreicht wird. Zudem bietet die Verwendung einer Struktur vorteilhafterweise gleichzeitig die Möglichkeit Informationen in den Strang einzubringen. So können vorteilhafterweise Informationen zur Haltbarkeit und/oder der Anwendung direkt auf den Strang aufgebracht werden, sodass der Verbraucher direkt auf dem Produkt diese Informationen wahrnehmen kann und nicht auf die Verpackung zurückgreifen muss, um an diese Informationen zu gelangen.

In einer Ausführungsform werden die Kanten des Stranges beschnitten.

In einer Ausführungsform wird ein Papier unter den geformten Strang untergelegt.

In einer Ausführungsform wird der Strang optional erhitzt. In einer Ausführungsform wird der Strang auf eine Kerntemperatur von 50 bis 70 °C, vorzugsweise 55 bis 65 °C, besonders vorzugsweise 60 bis 63 °C erhitzt und für 6 bis 600 Minuten, vorzugsweise 18,9 bis 189 Minuten, besonders vorzugsweise 30 bis 60 Minuten bei dieser Kerntemperatur gehalten.

In einer Ausführungsform wird der Strang auf eine Kerntemperatur von 65 bis 80 °C, vorzugsweise 70 bis 78 °C, besonders vorzugsweise 72 bis 75 °C erhitzt und für 0.6 bis 19 Minuten, vorzugsweise 0.9 bis 6 Minuten, besonders vorzugsweise 1.9 bis 3.8 min bei dieser Kerntemperatur gehalten.

Durch die Erhitzung des Stranges kann vorteilhafterweise die mikrobiologische Belastung vegetativer Zellen wie beispielsweise durch Salmonellen reduziert und somit die Haltbarkeit erhöht werden.

In einer Ausführungsform wird ein pflanzliches Pulver, vorzugsweise Mehl oder das Mahlerzeugnis in Pulverform auf die Stücke des Strangs nach der Zerteilung aufgetragen (Bemehlung).

Die Bemehlung der Stücke vor der Verpackung führt vorteilhafterweise zu einer weiteren Reduzierung des Feuchtigkeitsgehaltes und somit einer besseren Haltbarkeit. Weiterhin führt die Bemehlung dazu, dass die einzelnen Stücke beispielswiese beim Stapeln weniger aneinanderhaften (Antihaftwirkung) und somit leichter wieder voneinander trennbar sind, beispielsweise für die Zubereitung einer flüssigen Mahlerzeugnis-Zusammensetzung.

In einer Ausführungsform werden die Stücke des Stranges nach der Zerteilung unter Vakuum verpackt.

In einem Aspekt betrifft die Erfindung eine Mahlerzeugnis-Zusammensetzung zur Auflösung und/oder Dispergierung in einer verzehrbaren Flüssigkeit hergestellt und/oder herstellbar mittels des Verfahrens der vorliegenden Erfindung, dadurch gekennzeichnet, dass die Mahlerzeugnis-Zusammensetzung 5 bis 15, vorzugsweise 5 bis 12 Gew.-% Wasser, wie beispielsweise 5, 6, 7, 8, 9 10, 11, 12, 13, 14 oder 15 Gew.-% Wasser, und 2 bis 10 Gew.-% Pflanzenfett, wie beispielsweise 2, 2.5, 3, 3.5, 4, 4.5, 5, 5.5, 6, 6.5, 7,7.5, 8, 8.5, 9, 9.5 oder 10 Gew.-% Pflanzenfett, enthält.

In einer Ausführungsform ist die Mahlerzeugnis-Zusammensetzung nicht-flüssig.

In einer Ausführungsform umfasst die Mahlerzeugnis-Zusammensetzung 5 bis 15 Gew.-% Wasser. In einer Ausführungsform umfasst die Mahlerzeugnis-Zusammensetzung 5 bis 12 Gew.-% Wasser. In einer Ausführungsform umfasst die Mahlerzeugnis-Zusammensetzung 5 bis 10 Gew.-% Wasser.

In einer Ausführungsform umfasst die Mahlerzeugnis-Zusammensetzung 2 bis 10 Gew.-% Pflanzenfett. In einer Ausführungsform umfasst die Mahlerzeugnis-Zusammensetzung 2 bis 8 Gew.-% Pflanzenfett. In einer Ausführungsform umfasst die Mahlerzeugnis-Zusammensetzung 2 bis 6 Gew.-% Pflanzenfett.

In einer Ausführungsform umfasst die Mahlerzeugnis-Zusammensetzung 4 bis 10 Gew.-% Pflanzenfett. In einer Ausführungsform umfasst die Mahlerzeugnis-Zusammensetzung 4 bis 8 Gew.-% Pflanzenfett. In einer Ausführungsform umfasst die Mahlerzeugnis-Zusammensetzung 4 bis 6 Gew.-% Pflanzenfett.

In einer Ausführungsform ist die Mahlerzeugnis-Zusammensetzung eine nicht-flüssige Mahlerzeugnis Zusammensetzung.

In einer Ausführungsform betrifft die Erfindung eine Mahlerzeugnis-Zusammensetzung zur Auflösung in einer verzehrbaren Flüssigkeit hergestellt und/oder herstellbar mittels des Verfahrens gemäß einem der vorherigen Ansprüche, dadurch gekennzeichnet, dass die Mahlerzeugnis-Zusammensetzung 5 bis 15 Gew.-% Wasser, und 2 bis 10 Gew.-% Pflanzenfett enthält, wie beispielsweise 5, 6, 7, 8, 9, 10, 11, 12, 13, 14, oder 15 Gew.-% Wasser und 2, 2.5, 3, 3.5, 4, 4.5, 5, 5.5, 6, 6.5, 7, 7.5, 8, 8.5, 9, 9.5 oder 10 Gew.-% Pflanzenfett, vorzugsweise 5 bis 12 Gew.-% Wasser und 2 bis 8 Gew.-% Pflanzenfett, besonders vorzugsweise 5 bis 10 Gew.-% Wasser und 2 bis 6 Gew.-% Pflanzenfett, enthält, bezogen auf das Gesamtgewicht der Mahlerzeugnis-Zusammensetzung.

In einer Ausführungsform ist die Mahlerzeugnis-Zusammensetzung dadurch gekennzeichnet, dass die Mahlerzeugnis-Zusammensetzung einen Wasseraktivität-Wert (AW-Wert) von kleiner oder gleich 0.9, vorzugsweise kleiner oder gleich 0.75, besonders vorzugsweise kleiner oder gleich 0.6 aufweist.

In einer Ausführungsform ist die Mahlerzeugnis-Zusammensetzung dadurch gekennzeichnet, dass die Mahlerzeugnis-Zusammensetzung einen Wasseraktivität-Wert (aw-Wert) von kleiner oder gleich 0.9, wie beispielsweise 0, 0.1, 0.15, 0.2, 0.25, 0.3, 0.35, 0.4, 0.45, 0.5, 0.55, 0.6, 0.65, 0.7, 0.75, 0.8, 0.85 oder 0.9, vorzugsweise kleiner oder gleich 0.75, besonders vorzugsweise kleiner oder gleich 0.6 aufweist.

Der a_{w}-Wert ist ein Maß für die Haltbarkeit von Lebensmitteln und gibt insbesondere an, in welchem Maße das Wasser durch die Zusammensetzung gebunden ist. Ein hoher a_{w}-Wert fördert mikrobielles Wachstum. Die mittels des Verfahrens der vorliegenden Erfindung hergestellte nicht-flüssige Zusammensetzung weist vorteilhafterweise einen niedrigen a_{w}-Wert und somit eine hohe Haltbarkeit und Lagerbarkeit auf.

In einem Aspekt betrifft die Erfindung eine Lebensmittel-Zusammensetzung zur Auflösung und/oder Dispergierung in einer verzehrbaren Flüssigkeit enthaltend eine Mahlerzeugnis-Zusammensetzung hergestellt und/oder herstellbar mittels des Verfahrens der vorliegenden Erfindung.

In einer Ausführungsform betrifft die Erfindung eine nicht-flüssige Lebensmittel-Zusammensetzung zur Auflösung und/oder Dispergierung in einer verzehrbaren Flüssigkeit enthaltend eine Mahlerzeugnis-Zusammensetzung hergestellt und/oder herstellbar mittels des Verfahrens der vorliegenden Erfindung.

In einer Ausführungsform ist die verzehrbare Flüssigkeit ausgewählt aus der Gruppe bestehend aus Wasser, Tee, Kaffee, Kakao, Fruchtsaft, Gemüsesaft, Brühe, Kokoswasser, einem Smoothie, einer Suppe, einem Proteinshake, einer Kochsauce, einem Joghurt, einer flüssigen Mischung für die Herstellung von Eiscreme, und einem alkoholischen Getränk. In einer Ausführungsform ist die verzehrbare Flüssigkeit vorzugsweise Wasser.

In einer Ausführungsform ist die nicht-flüssige Lebensmittel-Zusammensetzung zur Auflösung und/oder Dispergierung in einer verzehrbaren Flüssigkeit ausgewählt aus der Gruppe bestehend aus einem Müsli, einem Porridge, einer Backmischung beispielsweise für Kuchen, Brötchen oder Brot, einer Suppe, einer Sauce, einem Dressing, einem Pudding, einem Cremedessert, einem Proteinshake, einem Getränk, einer Fertigmahlzeit, hochkalorischer Nahrung, einer Eiscreme-Mischung, Spezialnahrung, Sondennahrung und Astronautennahrung.

In einem Aspekt betrifft die Erfindung eine flüssige Mahlerzeugnis-Zusammensetzung hergestellt durch Auflösen und/oder Dispergierung der Mahlerzeugnis-Zusammensetzung oder der Lebensmittel-Zusammensetzung gemäß der vorliegenden Erfindung in einer verzehrbaren Flüssigkeit.

In einem Aspekt betrifft die Erfindung eine flüssige Lebensmittel-Zusammensetzung hergestellt durch Auflösen und/oder Dispergierung der Mahlerzeugnis-Zusammensetzung oder der Lebensmittel-Zusammensetzung gemäß der vorliegenden Erfindung in einer verzehrbaren Flüssigkeit.

In einer Ausführungsform ist die flüssige Lebensmittel-Zusammensetzung hergestellt durch Auflösen und/oder Dispergierung der Mahlerzeugnis-Zusammensetzung oder der Lebensmittel-Zusammensetzung gemäß der vorliegenden Erfindung in einer verzehrbaren Flüssigkeit ausgewählt aus der Gruppe bestehend aus einem Müsli, einem Porridge, einer Backmischung beispielsweise für Kuchen, Brötchen oder Brot, einer Suppe, einer Sauce, einem Dressing, einem Pudding, einem Cremedessert, einem Proteinshake, einem Getränk, einer Fertigmahlzeit, hochkalorischer Nahrung, Spezialnahrung, Sondennahrung und Astronautennahrung.

Der durchschnittliche Fachmann erkennt, dass technische Merkmale, Definitionen und Vorteile der Ausführungsformen, die für das erfindungsgemäße Verfahren zur Herstellung einer nicht-flüssigen Mahlerzeugnis-Zusammensetzung für die Herstellung einer flüssigen Mahlerzeugnis-Zusammensetzung, gleichermaßen auch für die mit dem Verfahren herstellbare nicht-flüssige Mahlerzeugnis-Zusammensetzung, eine daraus herstellbare Lebensmittel-Zusammensetzung und flüssige Mahlerzeugnis-Zusammensetzung gelten, und umgekehrt.

### DETAILIERTE BESCHREIBUNG

Die Erfindung betrifft ein Verfahren zur Herstellung einer nicht-flüssigen Mahlerzeugnis-Zusammensetzung für die Herstellung einer flüssigen Mahlerzeugnis-Zusammensetzung, umfassend die Bereitstellung einer pastösen Mischung aus einem Mahlerzeugnis, Wasser und einem Pflanzenfett und Formen der Paste zu einem Strang. Die Erfindung betrifft weiterhin eine Mahlerzeugnis-Zusammensetzung und eine Lebensmittel-Zusammensetzung hergestellt durch das erfindungsgemäße Verfahren und eine flüssige Mahlerzeugnis-Zusammensetzung durch Auflösen der Mahlerzeugnis- oder Lebensmittel-Zusammensetzung in einer verzehrbaren Flüssigkeit.

Jeder im Folgenden beschriebene Begriff ist in seiner allgemeinen Bedeutung zu verstehen, wie sie der Fachmann kennt. Die Definitionen werden im Folgenden beispielhaft angegeben, um zu verdeutlichen, wie jeder Begriff im Zusammenhang mit der Erfindung angewendet wird und in bevorzugten Ausführungsformen der Erfindung verwendet werden kann.

Wie hierin verwendet, sind die Begriffe "umfassend" und "einschließlich" oder grammatikalische Varianten davon so zu verstehen, dass sie die angegebenen Merkmale, Zahlen, Schritte oder Komponenten spezifizieren, aber nicht die Hinzufügung eines oder mehrerer zusätzlicher Merkmale, Zahlen, Schritte, Komponenten oder Gruppen davon ausschließen. Diese Begriffe umfassen auch die Begriffe "bestehend aus" und "im Wesentlichen bestehend aus".

Somit bedeuten die Begriffe "bestehend aus"/"einschließlich"/"mit", dass jeder weitere Bestandteil (oder auch Merkmale, Zahlen, Schritte und dergleichen) vorhanden sein kann/können. Der Begriff "bestehend aus" bedeutet, dass kein weiterer Bestandteil (oder auch Merkmale, Zahlen, Schritte und dergleichen) vorhanden ist.

Der Begriff "im Wesentlichen bestehend aus" oder grammatikalische Varianten davon sind, wenn er hier verwendet wird, als Spezifizierung der angegebenen Merkmale, Zahlen, Schritte oder Komponenten zu verstehen, schließen aber die Hinzufügung eines oder mehrerer zusätzlicher Merkmale, Zahlen, Schritte, Komponenten oder Gruppen davon nicht aus, jedoch nur, wenn die zusätzlichen Merkmale, Zahlen, Schritte, Komponenten oder Gruppen davon die grundlegenden und neuartigen Eigenschaften der beanspruchten Zusammensetzung, Vorrichtung oder des Verfahrens nicht wesentlich verändern.

Der Begriff "im Wesentlichen bestehend aus" bedeutet also, dass bestimmte weitere Bestandteile (oder auch Merkmale, Zahlen, Schritte und dergleichen) vorhanden sein können, nämlich solche, die die wesentlichen Merkmale der Zusammensetzung, der Vorrichtung oder des Verfahrens nicht wesentlich beeinträchtigen. Mit anderen Worten, der Begriff "im Wesentlichen bestehend aus" (der hier austauschbar mit dem Begriff "im Wesentlichen enthaltend" verwendet werden kann), erlaubt das Vorhandensein anderer Komponenten in der Zusammensetzung, Vorrichtung oder dem Verfahren zusätzlich zu den vorgeschriebenen Komponenten (oder ebenso Merkmalen, Zahlen, Schritten und dergleichen), vorausgesetzt, dass die wesentlichen Merkmale der Vorrichtung oder des Verfahrens durch das Vorhandensein anderer Komponenten nicht wesentlich beeinträchtigt werden.

Der Begriff "Verfahren" bezieht sich auf Methoden, Mittel, Techniken und Prozeduren zur Bewältigung einer bestimmten Aufgabe, einschließlich, aber nicht beschränkt auf solche Methoden, Mittel, Techniken und Prozeduren, die entweder bekannt sind oder von einem Fachmann aus bekannten Methoden, Mitteln, Techniken und Prozeduren entwickelt wurden.

Begriffe wie "im Wesentlichen", "ungefähr", "etwa", "ca." etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1% und umfassen stets den exakten Wert. "Ähnlich" beschreibt bevorzugt Größen die "ungefähr gleich" sind. "Teilweise" beschreibt bevorzugt zu mindestens 5 %, besonders bevorzugt zu mindestens 10 %, und insbesondere zu mindestens 20 %, in einigen Fällen zu mindestens 40 %.

Der Begriff "Mahlerzeugnis" im Sinne der vorliegenden Erfindung bezieht sich insbesondere auf ein Erzeugnis, das durch das Zerkleinern, insbesondere durch ein Mahlverfahren und/oder ein Schrotverfahren, pflanzlicher Rohstoffe wie beispielsweise von Getreide, Samen, Hülsenfrüchte oder Pseudogetreide erhalten wird. Ein Mahlerzeugnis umfasst abhängig vom Zerkleinerungsgrad beispielsweise Mehl, Schrot, Gries und Kleie. Mehl ist ein sehr feines Mahlerzeugnis, das eine sehr feine, pudrige Konsistenz hat. Es wird beispielsweise durch das Mahlen des Endosperms von Getreidekörnern wie Weizen oder Hafer hergestellt. Die Partikelgröße von Mehl liegt üblicherweise im Beriech unter 100 µm, wobei sehr feines Mehl Partikelgrößen im Bereich von 30 µm aufweisen kann. Bei Gries handelt es sich um ein mittelfeines Mahlerzeugnis, das eine körnigere Struktur aufweist. Die Partikelgröße von Grieß liegt üblicherweise im Bereich von 200 bis 500 µm. Bei Schrot handelt es sich um ein grobes Mahlerzeugnis, das grobe, unregelmäßig geformte Partikel umfasst Schrot kann dabei sämtliche Bestandteile des pflanzlichen Rohstoffes umfassen einschließlich der Schale (Kleie) von Getreiden. Die Partikelgröße von Schrot kann stark variieren, liegt aber typischerweise zwischen 500 µm und mehreren Millimetern. Kleie ist ein Nebenprodukt des Mahlprozesses und besteht hauptsächlich aus den faserigen, äußeren Schichten eines Getreidekorns, wie der Frucht- und Samenschale. Kleie hat eine grobe, faserige Struktur und ist besonders reich an Ballaststoffen und Nährstoffen. Die Partikelgröße von Kleie liegt typischerweise bei 300 bis 1500 µm, abhängig vom Mahlprozess. In einer Ausführungsform ist das Mahlerzeugnis vorzugsweise ein Mehl. In einer Ausführungsform ist das Mahlerzeugnis enzymatisch behandelt. Ein Mahlerzeugnis wird oft enzymatisch behandelt, um die in enthaltenen Stärken, Proteine und/oder Zellwandstrukturen weiter aufzuschließen und so die Textur, den Geschmack und die Löslichkeit des Endprodukts zu verbessern. In einer Ausführungsform ist das Mahlerzeugnis ein Hafer-Mahlerzeugnis, welches Hafer enthält. In einer Ausführungsform ist das Hafer-Mahlerzeugnis enzymatisch behandelt, vorzugsweise mit einer Amylase. Verfahren für die enzymatische Behandlung pflanzlicher Rohstoffe wie beispielsweise Hafer sind dem Fachmann bekannt und für Hafer beispielsweise in der WO2014123466A1 beschrieben.

Der Begriff "Getreide" bezeichnet eine Gruppe von Kulturpflanzen, welche meist einjährig sind und zu Familie der Süßgräser (Poaceae) gehören. Die Körner von Getreide auch "Früchte" genannt werden insbesondere als Nahrungs- und Futtermittel genutzt und enthalten verschiedene Nährstoffkomponenten wie beispielswiese Kohlenhydrate, Proteine, Fette, Vitamine und Mineralstoffe. Getreidekörner bestehen üblicherweise aus einem stärke- und (in geringerem Umfang) auch eiweißhaltigen Mehlkörper, einem fetthaltigen Keimling, einer miteinander verwachsenen Samenschale und Fruchtwand sowie einer zwischen Mehlkörper und Schale liegenden eiweißhaltigen Aleuronschicht. Das enthaltene Eiweiß einiger Getreidegattungen (beispielsweise Weizen, Roggen, Gerste, Triticale) wird auch als Kleber oder Gluten bezeichnet. Andere Getreide-Gattungen sind glutenfrei (beispielsweise Mais, Reis und Hirse). In einer Ausführungsform ist das Getreide ausgewählt aus der Gruppe bestehend aus Hafer, Reis, Dinkel, Hirse, Roggen, Gerste, Mais, Einkorn, Triticale und Weizen.

Der Begriff "Pseudogetreide" im Sinne der vorliegenden Erfindung bezeichnet Pflanzenarten, deren Samen ähnlich wie Getreide verwendet werden, die jedoch nicht zur Familie der Süßgräser (Poaceae) gehören, sondern zu anderen Pflanzenfamilien. Die Samen von Pseudogetreide enthalten typischerweise Stärke, Eiweiß, Vitamine wie B-Vitaminen, Mineralstoffe wie Eisen, Magnesium und Kalzium und Fette. Im Gegensatz zu vielen Getreidesorten enthalten Pseudogetreide kein Gluten. In einer Ausführungsform ist das Getreide ausgewählt aus der Gruppe bestehend aus Quinoa, Amaranth, Chia und Teff.

Der Begriff "Hülsenfrüchte" auch "Leguminosen" genannt im Sinne der vorliegenden Erfindung bezeichnet Pflanzen aus der Familie der Hülsenfrüchtler (Fabaceae), deren Früchte in Form von Hülsen wachsen. Die essbaren Samen dieser Pflanzen, wie Bohnen, Erbsen und Linsen, werden ebenfalls als Hülsenfrüchte bezeichnet. Hülsenfrüchte enthalten typischerweise pflanzliche Proteine, Ballaststoffe, Vitamine wie beispielsweise B-Vitamine, komplexe Kohlenhydrate und Mineralien wie Eisen, Magnesium, Zink und Kalium. In einer Ausführungsform ist das Getreide ausgewählt aus der Gruppe bestehend aus Soja, Erbsen, Lupine, Kichererbsen und Linsen.

Der Begriff "Früchte von Knöterichgewächsen" im Sinne der vorliegenden Erfindung bezeichnet die Samen oder Körner von Pflanzen, die zur Familie der Knöterichgewächse (Polygonaceae) gehören. Diese Pflanzenfamilie umfasst mehrere essbare Arten, die ähnliche Verwendungsmöglichkeiten wie Getreide bieten, aber botanisch gesehen kein Getreide sind. Diese Pflanzen können daher auch unter den Begriff "Pseudogetreide" gefasst werden. Die Samen enthalten typischerweise Proteine, Ballaststoffe, Vitamine (z.B. B-Vitamine), Mineralstoffe wie Magnesium, Eisen und Kalium und Antioxidantien. Ein Beispiel für "Früchte von Knöterichgewächsen" ist Buchweizen.

Der Begriff "Hanfgewächse" im Sinne der vorliegenden Erfindung bezeichnet eine Pflanzenfamilie, die sowohl Hanfarten (Cannabis) als auch Hopfen (Humulus) umfasst. Der Begriff bezieht sich insbesondere auf die Samen und Früchte, die von Hanfpflanzen gewonnen werden. Hanfsamen enthalten typischerweise Proteine, Omega-3- und Omega-6-Fettsäuren, Ballaststoffe und eine Vielzahl von Vitaminen und Mineralstoffen, darunter Vitamin E, Magnesium, Zink und Eisen. Hanfsamen enthalten kein Gluten.

Der Begriff "Nüsse" im Sinne der vorliegenden Erfindung bezeichnet essbare Samen oder Früchte, die von verschiedenen Pflanzenarten stammen und bei denen alle drei Schichten der Fruchtwand verholzt sind, die somit von einer harten Schale umgeben sind (Nussfrüchte). Nüsse enthalten typischerweise Fette, Proteine, Ballaststoffe, Vitamine (wie Vitamin E) und Mineralstoffe (wie Magnesium und Zink). In einer Ausführungsform sind die Nüsse ausgewählt aus der Gruppe bestehend aus Mandeln, Haselnüssen, Cashewnüssen, Macadamianüssen, Walnüssen, Paranüssen und Pekannüssen.

Der Begriff "Steinfrüchte" im Sinne der vorliegenden Erfindung bezeichnet eine Art von Frucht, die durch eine harte, steinartige Schicht, das sogenannte Endokarp, charakterisiert wird. Diese Schicht umschließt den Samen und dient als Schutz. Steinfrüchte sind eine Unterkategorie der Schließfrüchte, bei denen die Fruchtwand geschlossen bleibt und nicht aufplatzt, um die Samen freizusetzen. Eine Steinfrucht besteht aus drei Schichten: Exokarp (äußere Haut der Frucht, oft dünn und manchmal glatt oder behaart), Mesokarp (Fruchtfleisch) und Endokarp (harte, steinartige Schicht, die den Samen umgibt und schützt). Ein Beispiel für eine Steinfrucht ist die Kokosnuss.

Der Begriff "Samen" im Sinne der vorliegenden Erfindung bezeichnet eine der Ausbreitung dienende Gewebestruktur der Samenpflanzen (Spermatophyta), die aus einer Samenschale (Testa), dem Embryo und häufig noch einem Nährgewebe (Endosperm oder Perisperm) besteht. Samen enthalten typischerweise Fette (besonders ungesättigten Fettsäuren), Proteine, Ballaststoffe, Vitamine (wie Vitamin E) und Mineralien (z.B. Magnesium, Kalzium und Eisen). In einer Ausführungsform sind die Samen ausgewählt aus der Gruppe bestehend aus Sesam, Leinsamen, Sonnenblumenkernen und Kürbiskernen.

"Nicht-flüssig" im Sinne der vorliegenden Erfindung bezeichnet einen Aggregatzustand einer Zusammensetzung. Eine nicht-flüssige Zusammensetzung liegt in einer festen oder halbfesten Form vor und weist im Gegensatz zu einer Flüssigkeit keine oder nur sehr geringe Fließeigenschaften bei Raumtemperatur auf. In einer Ausführungsform liegt die Mahlerzeugnis Zusammensetzung in einer halbfesten Form, vorzugsweise in einer teigartigen Form vor. Eine Zusammensetzung in einer teigartigen Form bezeichnet insbesondere eine halbfeste, plastische Zusammensetzung, die unter Krafteinwirkung wie beispielsweise Druck oder Kneten verformbar ist, aber ohne Krafteinwirkung bei Raumtemperatur ihre Form behält und keine Fließeigenschaften zeigt. Eine teigartige Zusammensetzung ist nicht-flüssig, da sie nicht fließen kann.

"Flüssig" im Sinne der vorliegenden Erfindung bezeichnet einen physikalischen Zustand einer Substanz, die bei Raumtemperatur frei fließen kann und keine feste Form besitzt. "Flüssige Zusammensetzungen" oder auch "Flüssigkeiten" passen sich der Form ihres Behältnisses an, behalten jedoch ein konstantes Volumen

Eine "Paste" im Sinne der vorliegenden Erfindung bezeichnet eine nicht-flüssige, halbfeste Zusammensetzung, die eine streichfähige oder formbare Konsistenz aufweist. Eine Paste kann unter Krafteinwirkung wie beispielsweise Druck oder Kneten verformt und/oder verdichtet werden.

Eine Paste enthält üblicherweise einen hohen Anteil an festen Bestandteilen, üblicherweise einen Feststoffanteil von 10% oder mehr.

Ein "Pulver" im Sinne der vorliegenden Erfindung bezeichnet eine fein gemahlene, trockene Substanz, die aus festen Partikeln besteht, die in ihrer Größe variieren können. Diese Partikel sind in der Regel kleiner als 100 µm, was dem Pulver seine feine, pudrige Konsistenz verleiht. Ein Pulver hat einen sehr niedrigen Feuchtigkeitsgehalt und wird oft aus getrockneten pflanzlichen Materialien (z.B. Samen, Getreide, Nüsse) hergestellt. Je nach Art des Pulvers und den spezifischen Anforderungen des Herstellungsprozesses liegt der Feuchtigkeitsgehalt bei Pulvern üblicherweise zwischen 1 % und 10 %.

Der Begriff "Strang" bezieht sich im Sinne der vorliegenden Erfindung auf eine längliche Struktur, die aus einer Paste geformt wird. Der Begriff "Formen" bezieht sich insbesondere auf einen Prozess, bei dem eine Paste in eine bestimmte Gestalt, vorzugsweise in die Form eines Stranges, gebracht wird. Ein Strang im Sinne der vorliegenden Erfindung wird geformt, wenn eine Paste (eine halbfeste, formbare Masse) durch ein formgebendes Verfahren verdichtet und geformt wird, beispielsweise durch einen Extruder oder Vakuumfüller oder das Durchführen der Paste durch einen Walzenstuhl. Durch dieses formgebende Verfahren wird aus der Paste eine kontinuierliche, längliche Struktur (Strang) erzeugt. Der geformte Strang kann verschiedene Dicken aufweisen abhängig von dem verwendeten Formgebungsverfahren und den verwendeten Verfahrensparametern wie beispielsweise des Walzenabstandes oder der Schlitzbreite der Matrize des Extruders oder Vakuumfüllers durch welche die verdichtete Paste gepresst wird.

Der Begriff "Mischen" bezeichnet insbesondere einen Prozess, bei welchem zwei oder mehr Bestandteile beispielsweise Wasser, Pflanzenfett und ein Mahlerzeugnis miteinander vermengt werden, um eine gleichmäßige Verteilung der Bestandteile in der Mischung zu erreichen. Das Ziel des Mischvorgangs ist es dabei, eine homogene Mischung zu erzeugen, bei der alle Bestandteile gleichmäßig verteilt sind und keine sichtbaren Trennungen zwischen den einzelnen Bestandteilen besteht. Je nach Art der zu mischenden Bestandteile und ihrer Konsistenz können unterschiedliche Mischverfahren und Mischwerkzeuge angewendet werden, wie z.B. mechanisches Rühren, Kneten, Schlagen oder Mischen in Mischwerkzeugen wie beispielsweise einem Planetenmischer, vorzugsweise mit Schneebesen-Aufsatz oder einem Wendel-Mischwerkzeug.

Ein "Mischwerkzeug" ist eine Vorrichtung, die verwendet wird, um verschiedene Bestandteile wie feste, flüssige oder halbfeste Bestandteile durch mechanische Bewegung miteinander zu vermischen, beispielsweise durch Rühren, Kneten oder Vermengen, um so eine homogene Mischung der Bestandteile zu erzeugen.

Ein "Planetenmischer" ist ein Mischwerkzeug, das ein Rühr- oder Knetwerkzeug und ein Behältnis umfasst und üblicherweise in der Teigverarbeitung und bei pastösen oder halbflüssigen Substanzen verwendet wird. Es zeichnet sich durch seine besondere Bewegungsmechanik aus, bei der das Rühr- oder Knetwerkzeug wie beispielsweise ein Schneebesen-Aufsatz, Flachrührer-Aufsatz oder Knethaken-Aufsatz, um seine eigene Achse rotiert, während er gleichzeitig auf einer kreisförmigen Umlaufbahn um die Mitte des Behältnisses bewegt wird (planetarische Bewegung). Durch die planetarische Bewegung des Rührwerks wird eine gleichmäßige Verteilung der Zutaten gewährleistet.

Ein "Wendel-Mischwerkzeug" ist ein Mischwerkzeug, das eine spiralförmige oder wendelförmige Mischkonstruktion ausgestattet umfasst und üblicherweise für das Vermengen von groben oder klumpigen Materialien und in der Teigverarbeitung eingesetzt wird. Ein Wendel-Mischwerkzeug ermöglicht schonendes Mischen und Kneten, da die spiral- oder wendelförmige Konstruktion die Bestandteile und die Mischung sanft bewegt, ohne wesentlich Luft einzumischen oder das Produkt zu überhitzen. Die Spiralbewegung der Wendel-Mischkonstruktion zieht die Bestandteile dabei nach oben und bewegt sie gleichzeitig nach unten, was zu einer gleichmäßigen Verteilung der Bestandeile in der Mischung führt.

Ein "Cutter" ist ein Mischwerkzeug, das ein rotierendes Schneidwerkzeug und ein Behältnis umfasst, in welchem die Zutaten durch das Schneidewerkzeug miteinander vermischt werden. Das Schneidewerkzeug umfasst ein oder mehr rotierende Messer, vorzugsweise 2 bis 8 Messer, kann in unterschiedlichen Winkeln zum Behältnis angeordnet sein, um sowohl eine grobe Zerkleinerung und Vermischung als auch eine Emulgierung der Bestandteile zu ermöglichen und wird durch einen Motor vorzugsweise bei Drehzahlen von 1.000 bis über 10.000 U/min bewegt. Auch da Behältnis kann durch einen Motor betrieben während des Mischens gedreht werden.

Ein "Universalmischer" ist ein Mischwerkzeug, das eine Mischkonstruktion und einen Behälter umfasst und üblicherweise zur Herstellung homogener Massen, pastöser Mischungen oder pulverförmiger Zusammensetzungen eingesetzt wird. Die Mischkonstruktion kann dabei beispielsweise eine oder mehrere Rührflügel, Schnecken, Flügelmischer, Planetenmischwerkzeuge wie beispielsweise ein Schneebesen Aufsatz, Paddelrührer oder Messer sein, vorzugsweise eine Mischkonstruktion umfassend zwei Messer. Die Mischkonstruktion wird dabei durch einen Motor bewegt. Der Universalmischer ermöglicht dabei vorteilhafterweise eine schnelle Mischung und präzise Steuerung und Automatisierung des Mischprozesses, wodurch homogene und reproduzierbare Eigenschaften der Mischungen erzielt werden.

"Aufkonzentrieren" im Sinne der vorliegenden Erfindung bezieht sich auf einen Prozess, bei dem einer Zusammensetzung (z.B. eine Mischung in Form einer Paste, eines Teiges oder einer Flüssigkeit) Feuchtigkeit entzogen wird, um den Wassergehalt zu reduzieren. Das Aufkonzentrieren einer Zusammensetzung wird üblicherweise durchgeführt und die Haltbarkeit einer Zusammensetzung zu verbessern oder die weitere Verarbeitung der Zusammensetzung beispielsweise durch Formen zu einem Strang zu ermöglichen. Verfahren für die Aufkonzentrierung von Zusammensetzungen sind einem Fachmann bekannt und umfassen beispielsweise Heißlufttrocknung, Sprühtrocknung, Gefriertrocknung, Walzentrocknung und Vakuumkondensationstrocknung. Bei der Heißlufttrocknung wird warme Luft über oder durch die aufzukonzentrierende Zusammensetzung geleitet, um die Feuchtigkeit zu verdampfen. Dies erfolgt beispielsweise in einem Ofen oder Trockenschrank. Bei der Sprühtrocknung wird die Zusammensetzung, beispielsweise eine Flüssigkeit oder Paste, in einen feinen Nebel zerstäubt und in eine Trocknungskammer mit heißer Luft eingesprüht. Die feinen Tröpfchen verlieren durch die Hitze ihre Feuchtigkeit und sammeln sich als Pulverpartikel, in der Trockenkammer. Bei der Gefriertrocknung (Lyophilisation) wird die Zusammensetzung zunächst eingefroren und anschließend in eine Vakuumkammer eingebracht, in welcher durch Sublimation das in der Zusammensetzung enthaltene Wasser entfernt wird. Bei der Walzentrocknung wird die Zusammensetzung auf beheizte, rotierende Walzen aufgetragen, wodurch die in der Zusammensetzung enthaltene Flüssigkeit verdampft. Die Vakuumkondensationstrocknung ist ein Verfahren, bei dem eine Kombination aus Vakuum und Kondensation genutzt wird, um die Feuchtigkeit aus einer Zusammensetzung zu entfernen. Bei diesem Prozess wird die Verdampfung des Wassers im Produkt durch das Absenken des Luftdrucks auf ein Vakuumniveau bei niedrigen Temperaturen erleichtert, und der dabei entstehende Wasserdampf wird durch Kondensation entfernt.

"Vakuum" bezeichnet einen Zustand, in dem der Druck in einem Raum oder einem Behälter deutlich unter dem atmosphärischen Druck auf Meereshöhe (Normaldruck, 1013 hPa) liegt. Ein perfektes Vakuum wäre ein Raum, der vollständig frei von Materie ist, also keine Luft oder andere Gase enthält. In der Praxis betrifft der Begriff ein "technisches Vakuum", in welchem ein im Vergleich zum Normaldruck sehr niedriger Druck durch Entfernen von Luft und anderen Gasen aus dem Raum oder Behälter erreicht wird, der Druck, aber nicht vollständig null ist. Die Viskosität, auch als "dynamische Viskosität" bezeichnet, ist ein Maß für den Fließwiderstand einer Flüssigkeit bzw. einer flüssigen oder halbfesten Dispersion oder Zusammensetzung. Sie beschreibt die innere Reibung einer sich bewegenden Flüssigkeit, Dispersion oder Zusammensetzung. Je höher die dynamische Viskosität, desto dicker (weniger fließfähig) ist die Flüssigkeit, Dispersion oder Zusammensetzung. Je niedriger die dynamische Viskosität ist, desto dünner (fließfähiger) ist die Flüssigkeit, Dispersion oder Zusammensetzung. Die SI-Einheit der dynamischen Viskosität ist die Newton-Sekunde pro Quadratmeter (N*s/m2), häufig auch ausgedrückt als Pascal-Sekunde (Pa*s), Kilogramm pro Meter pro Sekunde (kg*m-1*s-1) und Centipoise (cP). Dabei ist 1 cp gleich 1 mPa*s.

Die dynamische Viskosität von Flüssigkeiten, Dispersionen oder Zusammensetzungen kann mittels verschiedener Arten von Viskosimetern und Rheometern gemessen werden, einschließlich und ohne Limitierung mittels eines Kapillarviskosimeters, Kugelfallviskosimeters und Rotationsviskosimeters. Diese Methoden sind dem Fachmann bekannt. In einer bevorzugten Ausführungsform wird die Viskosität der Paste mittels eines Rotationsviskosimeters, vorzugsweise eines Brookfield Viskosimeters bestimmt.

"Fette" sind lipidhaltige Substanzen, die sich hauptsächlich aus Triglyceriden zusammensetzen. Fette, die bei Raumtemperatur in flüssiger Form vorliegen werden als Öle bezeichnet. Öle enthalten in der Regel einen höheren Anteil an ungesättigten Fettsäuren im Vergleich zu nicht flüssigen Fetten wie beispielsweise halbfesten oder festen Fetten. Pflanzenfette und Pflanzenöle sind Fette, die aus pflanzlichen Rohstoffen wie beispielsweise Samen, Nüssen, Früchten oder anderen Pflanzenteilen gewonnen werden. In einer Ausführungsform ist das Pflanzenfett ausgewählt aus der Gruppe bestehend aus Rapsöl, Sonnenblumenöl, Sojaöl, Maiskeimöl, Distelöl, Hanföl, Leinöl, Olivenöl, Kokosfett, Palmöl, Palmkernfett, Kakaobutter, Haselnussöl, Mandelöl, Walnussöl, Kürbiskernöl, Sesamöl, Weizenkeimöl und Avocadoöl.

Ein "Schaumbildner" ist ein Zusatzstoff, der die Bildung und Stabilisierung von Schaum auf der Oberfläche eines Getränks ermöglicht. Schaumbildner werden verwendet, um ein angenehmes Mundgefühl zu erzeugen, die Textur des Getränks zu verbessern oder für ästhetische Zwecke, z.B. bei pflanzlichen Milchalternativen, um eine Schaumbildung auf Kaffeegetränken zu ermöglichen. Schaumbildner ermöglichen, Luft oder Gas in einer Flüssigkeit einzuschließen und diese als feine Bläschen in der Flüssigkeit zu stabilisieren. Diese Bläschen bilden den Schaum, der sich auf der Oberfläche des Getränks absetzt. Ohne Schaumbildner würden die Bläschen schnell zerfallen, da die Flüssigkeit nicht genug Oberflächenspannung aufrechterhalten kann, um den Schaum zu stabilisieren. In einer Ausführungsform ist der Schaumbilder ausgewählt aus der Gruppe bestehend aus Lecithin, Gellan-Gummi, Xanthan-Gummi, Guarkernmehl, Carrageen, Mono- und Diglyceride sowie pflanzlichen Saponinquellen vorzugsweise ausgewählt aus der Gruppe bestehend aus Quillaja-Saponinen, Yucca-Saponinen, Soja-Saponinen, Kichererbsen-Saponinen, Ginseng-Saponinen und Tee-Saponinen, Seifenkraut-Saponinen, Kreuzblütler-Saponinen, Primel-Saponinen und Bockshornklee-Saponinen.

"Geschmacksstoffe" bezeichnen Inhaltsstoffe, die verwendet werden, um den Geschmack und das Aroma einer Zusammensetzung zu verbessern oder zu verstärken. Diese Stoffe umfassen beispielsweise Süßungsmittel wie Zucker, Stevia, Agavensirup oder Aspartam, Salz, Säureregulatoren wie Zitronensäure, oder Aromastoffe wie Vanille-Aroma, Kakao, Zimt, Fruchtaroma, Schokoladen-Aroma, Nuss-Aroma, Karamell-Aroma, Kaffee und Minze.

"Verdickungsmittel" sind Substanzen, die verwendet werden, um die Viskosität (Dicke) von Flüssigkeiten oder halbflüssigen Produkten zu erhöhen. Verdickungsmittel binden üblicherweise Wasser in der Zusammensetzung. Bindemittel sind Zusatzstoffe, die verwendet werden, um verschiedene Bestandteile in einer Mischung zu verbinden und eine homogene, feste Struktur zu schaffen. Geliermittel sind Substanzen, die verwendet werden, um eine feste, gelartige Konsistenz in einer Mischung zu erzeugen. Geliermittel wirken durch das Binden von Wasser und das Bilden eines dreidimensionalen Netzwerks, das Flüssigkeiten einschließt. Substanzen die als Verdickungsmittel eingesetzt werden, können häufig auch als Bindemittel oder Geliermittel eingesetzt werden und umgekehrt. Beispiele für solche Substanzen sind Stärke, modifizierte Stärke, Glucomannane, Gellan, Agar Agar, Alginat, Pektin, Guar Gummi, Cellulose, Xanthan, Gummi Arabicum, Carrageen und Johannisbrotkernmehl.

"Säureregulatoren" sind Zusatzstoffe, die verwendet werden, um den pH-Wert einer Zusammensetzung zu kontrollieren und/oder zu stabilisieren. Sie dienen dazu, die Säure oder Alkalität einer Zusammensetzung anzupassen, wodurch deren Geschmack, Haltbarkeit und Textur beeinflusst werden. In einer Ausführungsform ist der Säureregulator ausgewählt aus der Gruppe bestehend aus Zitronensäure, Natriumcitrat, Milchsäure, Weinsäure, Essigsäure, Ascorbinsäure und Kaliumhydrogencarbonat.

"Lebensmittelfarbstoffe" sind Zusatzstoffe, die Lebensmitteln, Getränken und anderen Konsumprodukten eine bestimmte Farbe verleihen oder deren natürliche Farbe verstärken. Vorzugsweise werden im erfindungsgemäßen Kontext pflanzenbasierte Lebensmittelfarbstoffe eingesetzt, wie beispielsweise Beta-Carotin, Rote Beete, Kurkumin, Karamell, Paprikaextrakt, Traubenschalen, Radieschen-Konzentrate und Spirulina.

"Emulgatoren" sind Hilfsstoffe, die dazu dienen, zwei nicht miteinander mischbare Flüssigkeiten, wie zum Beispiel Öl und Wasser, zu einem fein verteilten Gemisch, der sogenannten Emulsion, zu vermengen und zu stabilisieren. Ähnliches gilt für die Aufmischung von festen, nicht löslichen Stoffen in einer Flüssigkeit, um eine sogenannte Suspension zu stabilisieren. Ein in Wasser wirksamer Emulgator umfasst bevorzugt eine sehr gut wasserlösliche Teilstruktur (z. B. Polyol) sowie eine gut fettlösliche Teilstruktur (z. B. Fettalkohol oder Fettsäure). Vorzugsweise ist der Emulgator ausgewählt aus der Gruppe bestehend aus Lecithin und Mono- und Diglyceriden.

"Ballaststoffe" (auch Nahrungsfasern oder Faserstoffe genannt) sind unverdauliche pflanzliche Kohlenhydrate, die hauptsächlich in Obst, Gemüse, Wurzel- und Knollengemüse, Getreide und Hülsenfrüchten vorkommen. Ballaststoffe werden im Dünndarm nicht abgebaut, gelangen unverdaut in den Dickdarm und fördern dort die Darmtätigkeit. In einer Ausführungsform ist der Ballaststoff aus einer Pflanzenfaser gewonnen, beispielsweise aus Weizen, Hafer, Leinsamen, Flohsamen, Chiasamen. Obstschalen wie beispielsweise von Äpfeln und Birnen, Karotten, Linsen, Bohnen, Kichererbsen, Mais und Zuckerrüben.

"Vitamine" sind organische Verbindungen, die ein Organismus nicht als Energieträger, sondern für andere lebenswichtige Funktionen benötigt, die jedoch der Stoffwechsel nicht bedarfsdeckend synthetisieren kann. Sie sind beispielsweise für das Wachstum, den Stoffwechsel und das Immunsystem eines Organismus von Bedeutung. Vitamine müssen mit der Nahrung aufgenommen werden, sie gehören zu den essenziellen Stoffen. Vitamine werden in fettlösliche und wasserlösliche Vitamine eingeteilt. Zu den fettlöslichen Vitaminen gehören beispielsweise Vitamin A, Vitamin D, Vitamin E und Vitamin K. Zu den wasserlöslichen Vitaminen gehören beispielsweise Vitamin B1, Vitamin B2, Vitamin B3, Vitamin B5, Vitamin B6, Vitamin B7, Vitamin B9, Vitamin B12 und Vitamin C.

"Mineralien" sind essenzielle anorganische Nährstoffe, die der Körper für eine Vielzahl von biologischen Prozessen benötigt. Sie spielen eine zentrale Rolle bei der Aufrechterhaltung von Körperfunktionen, wie der Bildung von Knochen und Zähnen, der Regulierung des Wasserhaushalts, der Unterstützung des Stoffwechsels und der Weiterleitung von Nervenimpulsen. Da der Körper Mineralien nicht selbst herstellen kann, müssen sie über die Ernährung zugeführt werden. Mineralien werden in Makromineralien (Mengenelemente) und Mikromineralien (Spurenelemente) eingeteilt. Makromineralien werden in größeren Mengen benötigt, da sie für grundlegende Funktionen wie den Aufbau von Knochen und die Aufrechterhaltung des Flüssigkeitshaushalts erforderlich sind. Zu den Makromineralien gehören beispielsweise Kalzium, Magnesium, Natrium, Kalium und Phosphor. Mikromineralien werden nur in sehr geringen Mengen benötigt, sind aber trotzdem essenziell beispielsweise für den Stoffwechsel und das Immunsystem. Zu den Mikromineralien gehören beispielsweise Eisen, Zink, Selen, Jod und Kupfer.

Der Begriff "zusätzliche Proteine" im Sinne der vorliegenden Erfindung bezieht sich auf die Zugabe von weiteren Proteinquellen zu einer Zusammensetzung, welche bereits Proteine enthält, um den Proteingehalt des der Zusammensetzung zu erhöhen. In einer Ausführungsform handelt es sich bei den zusätzlichen Proteinen um pflanzliche Proteine. Zusätzliche Proteine können aus einer Vielzahlt von pflanzlichen Quellen gewonnen werden wie beispielsweise Erbsen, Reis, Soja, Nüssen wie beispielsweise Mandel, Samen wie Sonnenblumenkerne, Kürbiskerne und Hanfsamen.

"Probiotika" bzw. ein "Probiotikum" in Sinne der vorliegenden Erfindung bezeichnet lebende Mikroorganismen, insbesondere spezifische Bakterienstämme und Hefen, die, wenn sie in ausreichender Menge verabreicht werden, das natürliche Mikrobiom (Darmflora) des menschlichen und tierischen Darms unterstützen, indem sie das Gleichgewicht der Darmflora fördern und aufrechterhalten. Beispiele für Probiotika umfassen ohne Limitierung darauf Lactobacillus-Stämme wie Lactobacillus acidophilus, Lactobacillus rhamnosus, Lactobacillus infanti und Lactobacillus casei, Saccharomyces-Stämme wie Saccharomyces boulardii, Bifidobakterium-Stämme wie Bifidobacterium bifidum, Bifidobacterium longum und Bifidobacterium lactis, Escherichia coli Nissle 1917 und Streptococcus thermophilus. In einer Ausführungsform wird das Probiotikum in Pulverform während der Herstellung der Paste zugegeben. Durch Herstellungsverfahren wie Gefriertrocknung oder Sprühtrocknung, können lebende probiotische Mikroorganismen in eine stabile, pulverisierte Form gebracht werden, in der sie ihre probiotischen Eigenschaften beibehalten. Diese Pulverform ermöglicht eine gute Lagerung und leichte Einmischung in Zusammensetzungen wie der Paste und/oder der Mahlerzeugnis-Zusammensetzung.

Ein "Konservierungsmittel" im Sinne der vorliegenden Erfindung betrifft eine Substanz, welche einer Zusammensetzung wie beispielsweise der Paste oder der Lebensmittel-Zusammensetzung zugesetzt wird, welche das Wachstum von Mikroorganismen wie Bakterien, Hefen und Schimmelpilzen zu hemmt. Durch den Zusatz eines Konservierungsmittels zu einer Zusammensetzung wie deren Haltbarkeit und Stabilität erhöht. Beispiele für Konservierungsmittel umfassen ohne Limitierung darauf Kaliumsorbat, Natriumbenzoat, Kaliumdisulfit, Natriumbisulfit, Natriumnitrit, Natriumnitrat, Natriumacetat, Calciumpropionat, Ascorbinsäure (Vitamin C), Erythorbinsäure, Phosphate, Milchsäure, Butylhydroxyanisol (BHA) und Butylhydroxytoluol (BHT).

Der Begriff "Rotationsmittel" im Sinne der vorliegenden Erfindung bezieht auf eine mechanische Vorrichtung, die rotative Kraft verwendet, um eine Zusammensetzung wie beispielsweise eine Paste zu verdichten und zu formen. Diese Vorrichtungen nutzen eine Drehbewegung (rotative Bewegung) zur Kraftübertragung, um die Zusammensetzung beispielsweise durch eine Düse, Form, Matrize oder einen Schlauch zu pressen und so zu formen. Rotative Kraft oder rotativer Kraftaufwand in diesem Zusammenhang bezieht sich auf die Kraft, die durch eine Drehbewegung oder Rotation erzeugt wird und dazu verwendet wird die Zusammensetzung (beispielsweise die Paste) zu bewegen, formen oder zu verarbeiten. Diese Kraft entsteht, wenn eine mechanische Vorrichtung wie beispielsweise eine Schnecke, eine Spindel, eine Walze, oder eine Trommel sich um eine Achse dreht und dabei das Material entweder durch Druck oder Reibung bewegt. Zu den Rotationsmitteln in Sinne der vorliegenden Erfindung zählen beispielsweise Extruder, Vakuumfüller, Walzen, Rollen, und Pumpen.

In Vorrichtungen wie einem Extruder, einem Vakuumfüller wird die rotative Kraft eingesetzt, um die Zusammensetzung durch eine Matrize zu drücken, um so einen Strang erzeugen. In einem Extruder beispielsweise dreht sich eine Extruderschnecke um eine Achse und transportiert dabei die Zusammensetzung (beispielsweise die Paste) nach vorne. Die rotative Kraft der Schnecke übt Druck auf die Zusammensetzung aus, um diese durch die Matrize zu drücken. In einem Vakuumfüller beispielsweise wird die Zusammensetzung beispielsweise durch ein um eine Achse rotierendes Flügelzellenförderwerk transportiert und durch die Matrize gepresst.

Ein "Extruder" ist eine mechanische Vorrichtung und ein Rotationsmittel im Sinne der vorliegenden Erfindung, mittels welcher eine Zusammensetzung wie eine Paste zu einem Strang geformt werden kann. Auf das in den Extruder eingespeiste Material wird durch eine rotierende Schnecke (Extruderschnecke) durch ihre Drehbewegung kontinuierlich eine rotative Kraft ausgeübt und dieses durch den Extruder bewegt. Während sich das Material entlang der Schnecke bewegt, wird es durch die rotative Kraft verdichtet. Am Ende des Extruders wird es durch eine Matrize gepresst, um die gewünschte Form des Stranges zu erhalten. Ein Extruder, welcher eine Extruderschnecke aufweist, wird als Einwellenextruder bezeichnet. Ein Extruder, welcher zwei oder mehr ineinandergreifende Extruderschnecken aufweist, wird als Doppel- bzw. Mehrfachschneckenextruder bezeichnet.

Ein "Vakuumfüller" ist eine mechanische Vorrichtung und ein Rotationsmittel im Sinne der vorliegenden Erfindung, mittels welcher eine Zusammensetzung wie eine Paste zu einem Strang geformt werden kann. Das Material (z.B. die Paste) wird durch Vakuumsog in den Füller gezogen. Ein Flügelzellenförderwerk oder eine rotierende Schnecke transportiert das Material anschließend kontinuierlich in die Abfüllkammer des Vakuumfüllers. Durch das Durchpressen durch eine Matrize wird das Material (z.B. die Paste) anschließend geformt.

Der Begriff "Verdichten" im Sinne der vorliegenden Erfindung bezieht sich auf einen Prozess, bei dem eine Zusammensetzung wie eine Paste oder ein anderes formbares Material durch Druck und rotative Kräfte in ein kleineres Volumen gebracht wird, um ihre Konsistenz zu verändern und sie für die weitere Verarbeitung vorzubereiten. Durch das Verdichten wird die Substanz kompakter und gleichmäßiger, wodurch eine homogene Struktur und gleichmäßige Textur erzielt wird. Beim Durchlaufen der rotierenden Schnecke in einem Extruder wird die Zusammensetzung verdichtet, indem es unter Druck gesetzt und in eine kompakte Masse gepresst wird. Dies hilft, die Formbarkeit und Konsistenz des Materials zu verbessern, bevor es durch die Matrize gepresst wird. In einem Vakuumfüller wird das Material durch die rotative Kraft beispielsweise eines Flügelzellenförderwerkes in Verbindung mit Vakuumdruck verdichtet. In einem Walzenstuhl wird die Zusammensetzung durch das Durchlaufen zwischen zwei rotierenden Walzen verdichtet.

Eine "Matrize" im Sinne der Erfindung betrifft ein Formwerkzeug, das verwendet wird, um Materialien (z.B. eine Paste) durch eine bestimmte Form wie beispielsweise einen Schlitz, auch Spalt genannt, zu leiten oder zu pressen, um ein gewünschtes Endprodukt mit einer festgelegten Form, Größe oder Struktur, beispielsweise in Form eines Stranges, zu erzeugen. Die Matrize enthält spezifische Öffnungen, insbesondere einen Schlitz bzw. Spalt, welcher die Form und Größe des extrudierten Produktes vorgeben. Die Schlitzbreite bezieht sich auf die Breite des Spaltes in der Matrize beispielsweise eines Extruders oder eines Vakuumfüllers. Die Schlitzbreite bestimmt, wie dick bzw. breit das extrudierte oder mittels des Vakuumfüllers geformte Material ist. Eine größere Schlitzbreite führt zu dickeren bzw. breiteren Produkten, während eine kleinere Schlitzbreite dünnere bzw. feinere Produkte erzeugt.

Eine "Walze" im Sinne der vorliegenden Erfindung ist ein zylindrisches mechanisches Bauteil, das um seine eigene Achse rotiert und dazu verwendet wird, ein Material wie eine Paste zu glätten, auszudünnen, zu formen oder zu transportieren. Die Walze übt durch ihre Rotation Druck auf das Material aus, wodurch das Material verformt und komprimiert wird. Eine Walze kann dabei glatt oder strukturiert sein. Eine strukturierte Walze kann beispielsweise eine der folgenden Strukturen aufweisen: eine Rille, eine Linie, eine Kerbe, eine Prägung und/oder eine Rändelstruktur.

Ein "Walzenstuhl" im Sinne der vorliegenden Erfindung ist eine Vorrichtung, welche mehrere Walzen beispielsweise 2, 3, 4, 5, 6, 7, 8, 9, oder 10 Walzen, enthält. Die Walzen des Walzenstuhls rotieren üblicherweise in gegenläufiger Richtung und ziehen so das Material durch den Walzenstuhl hindurch. Das Material wie beispielsweise eine Paste wird dabei durch die rotative Kraft und den dadurch ausgeübten Druck verformt und verdichtet und so beispielsweise ein Strang geformt. Der Abstand zwischen den Walzen bestimmt dabei die Dicke des geformten Materials, z.B. des Strangs.

Die "Wasseraktivität" bzw. der "a_{w}-Wert" bezeichnet den frei verfügbaren Anteil an Wasser in einem Material oder Lebensmittel, der mikrobielles Wachstum, chemische Reaktionen und die Haltbarkeit beeinflusst. Der a_{w}-Wert gibt an, wie viel Wasser im Produkt vorhanden ist, das für mikroorganismische Aktivität (wie Bakterien, Schimmel und Hefen) verfügbar ist. Ein niedriger a_{w}-Wert hemmt das Wachstum dieser Mikroorganismen und verlängert die Haltbarkeit des Produkts. Die Wasseraktivität bzw. der a_{w}-Wert ist ein Verhältnis zwischen dem Dampfdruck des Wassers in einem Material oder Lebensmittel und dem Dampfdruck von reinem Wasser bei gleicher Temperatur. Der a_{w}-Wert wird auf einer Skala von 0 bis 1 angegeben. Ein Wert von 0 bedeutet, dass kein frei verfügbares Wasser im Material vorhanden ist. Ein Wert von 1 entspricht reinem Wasser, in dem das gesamte Wasser frei verfügbar ist.

Der Begriff "Auflösung" im Sinne der vorliegenden Erfindung bezieht sich auf einen Prozess, bei dem ein Material (z.B. die Zusammensetzung der vorliegenden Erfindung) in einer Flüssigkeit in ihre molekularen Bestandteile zerfällt und eine homogene Lösung bildet. Der Begriff "Dispergierung" im Sinne der vorliegenden Erfindung bezeichnet einen Prozess, bei dem ein Material (z.B. die Zusammensetzung der vorliegenden Erfindung) in einer Flüssigkeit in feine Partikel oder Tröpfchen zerstreut wird, ohne sich vollständig aufzulösen. Das Material bleibt dabei in feinen Teilchen in der Flüssigkeit suspendiert, sodass keine einheitliche molekulare Lösung entsteht. In einer Ausführungsform können teile der Zusammensetzung in einer verzehrbaren Flüssigkeit aufgelöst vorliegen und Teile der Zusammensetzung in der Flüssigkeit dispergiert vorliegen.

Eine "verzehrbare Flüssigkeit" auch "verzehrbare Lösung" genannt, bezeichnet jede Flüssigkeit, die für den tierischen oder menschlichen Verzehr geeignet ist und ohne erhebliche oder gänzlich ohne Gesundheitsrisiken konsumiert werden kann. In einer Ausführungsform ist die verzehrbare Flüssigkeit ausgewählt aus der Gruppe bestehend aus Wasser, Tee, Kaffee, Kakao, Fruchtsaft, Gemüsesaft, Brühe, Kokoswasser und alkoholischen Getränken. In einer Ausführungsform ist die verzehrbare Flüssigkeit vorzugsweise Wasser.

### FIGUREN

Im Folgenden soll die Erfindung anhand von Figuren näher erläutert werden, ohne auf diese beschränkt zu sein.

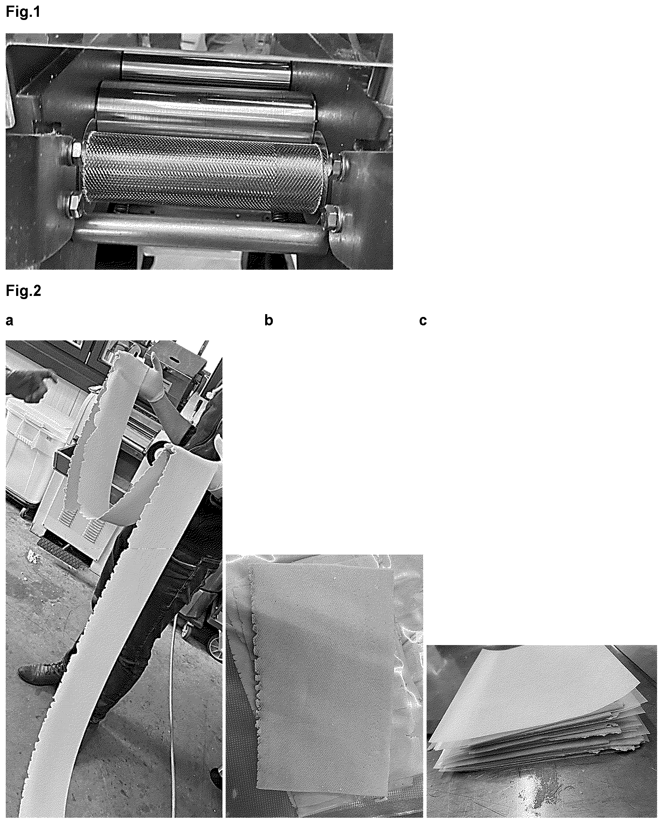

**Fig.1****:** Kalibrierstation mit strukturierter Walze. Die Kalibrierstation wird verwendet, um im Anschluss an das Formen des Stranges aus der Paste die Dicke des Stranges für das spätere Portionieren und Zerteilen und Verpacken auf eine einheitliche Dicke einzustellen. Bei der Kalibrierstation handelt es sich um einen Walzenstuhl, welcher mindestens zwei Walzen umfasst und, die Walzen einen Abstand aufweisen, welcher kleiner ist als die Schlitzbreite des Spaltes der Matrize, welche für das Formen des Stranges verwendet wurde.
**Fig.2:** (a) Mittels eines Extruders aus der Paste geformter Strang, welcher anschließend durch die Kalibrierstation auf eine einheitliche Dicke geformt wurde, (b) anschließend durch Zerteilung portionierter Strang mit (c) zwischengelegtem Papier für die Separierung.

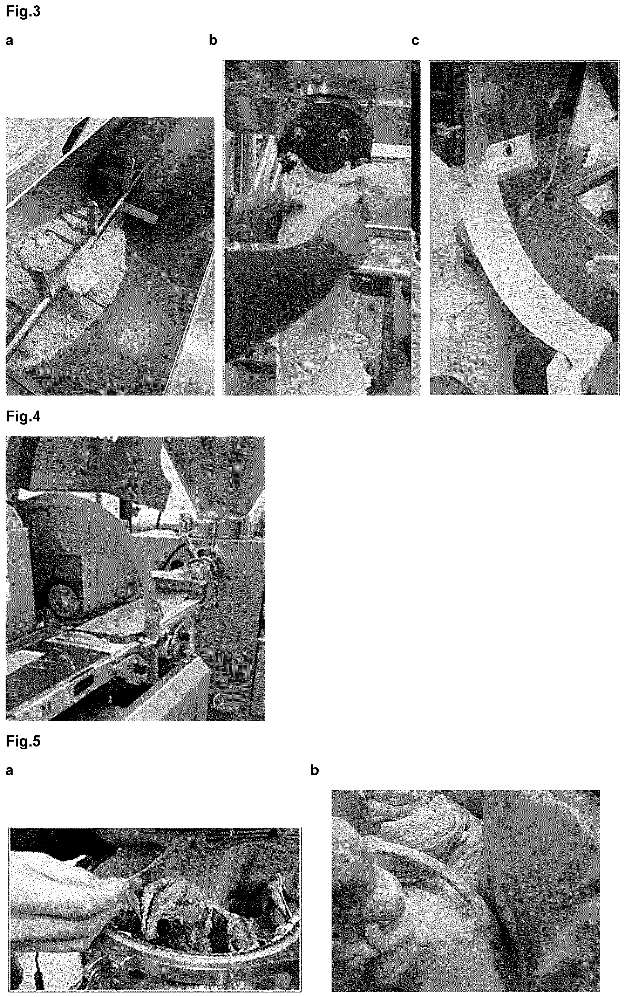

Fig. 3: (a) Paste, welche in einen Extruder eingebracht wird. (b) Strang, welcher durch die Matrize des Extruders geformt wird. (c) Strang, welcher durch eine Kalibrierstation auf eine einheitliche Dicke eingestellt wurde.
**Fig.4****:** Mittels eines Vakuumfüllers geformter und zerteilter Strang.
**Fig.5:** (a) und (b) Herstellung einer Paste, welche mittels eines Vakuumkondensationstrockners getrocknet wurde, sodass die Paste einen Wassergehalt von 5 bis 12 Gew.-% Wasser und 2 bis 10 Gew.-% Pflanzenfett enthält und für die weitere Verarbeitung zu einem Strang verwendet werden kann.

## Patentansprüche

1. **Verfahren** zur Herstellung einer nicht-flüssigen Mahlerzeugnis-Zusammensetzung für die Herstellung einer flüssigen Mahlerzeugnis-Zusammensetzung, umfassend
i. Bereitstellen einer Paste enthaltend ein Mahlerzeugnis, Wasser und ein Pflanzenfett, wobei die Paste 5 bis 50 Gew.-% Wasser und 2 bis 10 Gew.-% Pflanzenfett enthält, bezogen auf das Gesamtgewicht der Paste,
ii. Formen der Paste (i.) zu einem Strang.

2. Verfahren gemäß Anspruch 1, zusätzlich umfassend (iii.) Zerteilen des Strangs in einzelne Stücke.

3. Verfahren einem der vorherigen Ansprüche, **dadurch gekennzeichnet, dass** die Bereitstellung der Paste umfasst
i. Bereitstellen eines Pulvers enthaltend ein Mahlerzeugnis,
ii. Zugabe von 2 bis 10 Gew.-% Pflanzenfett zu (i.) und Mischen in einer Mischvorrichtung, und
iii. Zugabe von 5 bis 50 Gew.-% Wasser, vorzugsweise 5 bis 15 Gew.-% Wasser, besonders vorzugsweise 5 bis 12 Gew.-% Wasser, ganz besonders vorzugsweise 5 bis 10 Gew.-% Wasser, zu (ii.), und Mischen in einer Mischvorrichtung,
oder
i. Bereitstellen einer flüssigen Zusammensetzung enthaltend ein Mahlerzeugnis,
ii. Zugabe von 2 bis 10 Gew.-% Pflanzenfett zu (i.) und Mischen in einer Mischvorrichtung, und
iii. Aufkonzentrieren der Mischung gemäß (ii.), wobei die Mischung nach dem Aufkonzentrieren 5 bis 50Gew.-% Wasser, vorzugsweise 5 bis 15 Gew.-% Wasser, besonders vorzugsweise 5 bis 12 Gew.-% Wasser, ganz besonders vorzugsweise 5 bis 10 Gew.-% Wasser, und 2 bis 10 Gew.-% Pflanzenfett enthält, bezogen auf das Gesamtgewicht der Mischung.

4. Verfahren gemäß Anspruch 3, wobei die Mischung unter Vakuum bei einer Temperatur von 50 bis 80 °C, vorzugsweise 55 bis 75 °C, besonders vorzugsweise 50 bis 70 °C, und einem Druck von 10 bis 40 mbar, vorzugsweise 15 bis 35 mbar, besonders vorzugsweise 20 bis 30 mbar, und Verwendung eines Wendel-Mischwerkzeuges getrocknet wird.

5. Verfahren gemäß einem der vorherigen Ansprüche **dadurch gekennzeichnet, dass**
a. das Mahlerzeugnis hergestellt ist aus Getreide, Pseudogetreide, Hülsenfrüchten, Früchten von Knöterichgewächsen, Hanfgewächsen, Nüssen, Fruchtkapseln, Steinfrüchten und/oder Samen, vorzugsweise aus Getreide, besonders vorzugsweise aus Hafer, und/oder
b. das Pflanzenfett ausgewählt ist aus der Gruppe bestehend aus Rapsöl, Sonnenblumenöl, Sojaöl, Maiskeimöl, Distelöl, Hanföl, Leinöl, Olivenöl, Kokosfett, Palmöl, Palmkernfett, Kakaobutter, Haselnussöl, Mandelöl, Walnussöl, Kürbiskernöl, Sesamöl, Avocadoöl und Weizenkeimöl, vorzugsweise Rapsöl, und/oder
c. die Paste optional einen Schaumbildner, einen Geschmacksstoff, ein Süßungsmittel, ein Verdickungsmittel, ein Bindemittel, ein Geliermittel, einen Konservierungsstoff, einen Säureregulator, einen Lebensmittelfarbstoff, einen Emulgator, einen Ballaststoff, ein Vitamin, ein Mineral, ein Probiotikum, Koffein, Kurkuma, Matcha, und/oder zusätzliche Proteine enthält.

6. Verfahren gemäß einem der vorherigen Ansprüche, **dadurch gekennzeichnet, dass** die Paste mittels eines Rotationsmittels zu einem Strang geformt wird, wobei durch das Rotationsmittel vorzugsweise ein rotativer Kraftaufwand auf die Paste ausgeübt wird.

7. Verfahren gemäß Anspruch 6, **dadurch gekennzeichnet, dass** das Rotationsmittel eine Walze, eine Rolle, eine Extruderschnecke, eine Pumpe und/oder ein Vakuumfüller ist.

8. Verfahren gemäß einem der vorherigen Ansprüche **dadurch gekennzeichnet, dass** Formen der Paste zu einem Strang umfasst
i. Verdichten der Paste in einem Extruder, und
ii. Extrudieren der verdichteten Paste durch eine Matrize, wodurch der Strang geformt wird,
und/oder
i. Verdichten der Paste in einer Kammer mittels eines Vakuumfüllers, und
ii. Pressen der verdichteten Paste durch eine Matrize, wodurch der Strang geformt wird, wobei die Matrize einen Spalt mit einer Schlitzbreite zwischen 10 bis 1200 mm aufweist, vorzugsweise 200 bis 1000 mm, besonders vorzugsweise 300 bis 800 mm,
und/oder
i. Durchführen der Paste durch einen Walzenstuhl, wobei der Walzenstuhl mindestens zwei Walzen umfasst.

9. Verfahren gemäß Anspruch 8, **dadurch gekennzeichnet, dass**
a. der Extruder mindestens eine Extruderschnecke mit 2 bis 10 Windungen, vorzugsweise 3 bis 7 Windungen, besonders vorzugsweise 3 bis 4 Windungen aufweist, und/oder
b. die Matrize einen Spalt mit einer Schlitzbreite zwischen 10 und 1200 mm aufweist, vorzugsweise zwischen 100 und 800 mm, besonders vorzugsweise zwischen 150 und 300 mm.

10. Verfahren gemäß einem der Ansprüche 8 und 9, zusätzlich umfassend Durchführen des Stranges durch mindestens einen Walzenstuhl, wobei der Walzenstuhl mindestens 2 Walzen umfasst und die Walzen einen Abstand aufweisen, welcher kleiner ist als die Schlitzbreite des Spaltes der Matrize gemäß Anspruch 9 oder die Schlitzbreite des Spaltes der Matrize gemäß Anspruch 8.

11. Verfahren gemäß Anspruch 10, wobei mindestens eine der Walzen eine Struktur auf der Oberfläche aufweist, vorzugsweise eine Rille, eine Linie, eine Kerbe, eine Prägung und/oder eine Rändelstruktur.

12. Verfahren gemäß Anspruch 11, wobei die Struktur ausgewählt ist aus der Gruppe bestehend aus einer Schrift, einer Linie, einem Bild und/oder Kombinationen davon, und Informationen zur Haltbarkeit der nicht-flüssigen Mahlerzeugnis-Zusammensetzung, zur Herstellung einer flüssigen Mahlerzeugnis-Zusammensetzung aus der nicht-flüssigen Mahlerzeugnis-Zusammensetzung und/oder zur Portionierung der nicht-flüssigen Mahlerzeugnis-Zusammensetzung umfasst.

13. **Mahlerzeugnis-Zusammensetzung** zur Auflösung und/oder Dispergierung in einer verzehrbaren Flüssigkeit hergestellt und/oder herstellbar mittels des Verfahrens gemäß einem der vorherigen Ansprüche, **dadurch gekennzeichnet, dass** die Mahlerzeugnis-Zusammensetzung 5 bis 15 Gew.-% Wasser und 2 bis 10 Gew.-% Pflanzenfett enthält, bezogen auf das Gesamtgewicht der Mahlerzeugnis-Zusammensetzung.

14. Mahlerzeugnis-Zusammensetzung gemäß dem vorherigen Anspruch, **dadurch gekennzeichnet, dass** die Mahlerzeugnis-Zusammensetzung einen Wasseraktivität-Wert (AW-Wert) von kleiner oder gleich 0.9, vorzugsweise kleiner oder gleich 0.75, besonders vorzugsweise kleiner oder gleich 0.6 aufweist.

15. **Lebensmittel-Zusammensetzung** zur Auflösung und/oder Dispergierung in einer verzehrbaren Flüssigkeit enthaltend eine Mahlerzeugnis-Zusammensetzung hergestellt und/oder herstellbar mittels des Verfahrens gemäß einem der vorherigen Ansprüche.

16. **Flüssige Mahlerzeugnis-Zusammensetzung** hergestellt durch Auflösen und/oder Dispergierung der Mahlerzeugnis-Zusammensetzung gemäß einem der Ansprüche 13 und 14 oder der Lebensmittel-Zusammensetzung gemäß Anspruch 15 in einer verzehrbaren Flüssigkeit.
